# FASCICULE DE BREVET EUROPEEN

(11) **EP 4 396 789 B1**
(45) Date de publication et mention de la délivrance du brevet: **10.06.2026**
(21) Numéro de dépôt: 22769996.4
(22) Date de dépôt: 31.08.2022
(51) Int. Cl.: G06V 10/44, G06V 40/16, G06V 10/75

(54) **PROCÉDÉ DE MISE EN RELATION D'UNE IMAGE CANDIDATE AVEC UNE IMAGE DE RÉFÉRENCE**
VERFAHREN ZUM IN-BEZIEHUNG-SETZEN EINES KANDIDATENBILDES MIT EINEM REFERENZBILD
METHOD FOR MATCHING A CANDIDATE IMAGE WITH A REFERENCE IMAGE

(30) Priorité: 01.09.2021 FR 2109141
(43) Date de publication de la demande: 10.07.2024
(73) Titulaire: Kerquest, 73310 Chindrieux (FR)
(72) Inventeur: BOUTANT, Yann, 73310 CHINDRIEUX (FR); ROSSET, Gaël, 73310 CHINDRIEUX (FR)
(74) Mandataire: Atout PI Laplace
(86) Numéro de dépôt international: PCT/EP2022/074254
(87) Numéro de publication internationale: WO 2023/031305

(56) Documents cités:
- FR-A1- 2 875 628
- US-A1- 2014 044 359
- US-A1- 2014 147 022

## Description

La présente invention concerne la mise en relation d'images, et plus particulièrement la mise en relation d'au moins une partie d'une image candidate avec au moins une image de référence, en vue de sa comparaison ou confrontation avec cette image de référence. La présente invention concerne plus particulièrement le domaine technique du recalage d'images ou de points, et de la reconnaissance de sujets matériels (par exemple d'objets), notamment pour apprécier l'appartenance d'un sujet matériel à une classe prédéterminée de sujets matériels. En pratique, la présente invention concerne un procédé de mise en relation d'une partie au moins d'une image candidate avec au moins une image de référence. La présente invention concerne aussi un procédé d'élaboration d'un ensemble de listes de référence à partir d'une pluralité d'images de référence, notamment en vue de la mise en œuvre du procédé de mise en relation selon l'invention.

Différentes méthodes de recalage d'images sont connues, qui comparent directement deux images de nature comparable afin de les rapprocher voire de les superposer. Certaines de ces méthodes de recalage très répandues déterminent dans deux images à comparer, directement et indépendamment, des points d'intérêts et leurs descripteurs locaux associés, puis tentent de mettre en correspondance successivement lesdits descripteurs locaux, donc les points d'intérêts homologues entre les images. Enfin, elles recherchent l'existence d'une transformation géométrique optimale liant ces deux images et l'appliquent le cas échéant à l'une des deux pour réaliser un recalage effectif des images.

Des méthodes de reconnaissance d'objets sont aussi connues, basées sur l'analyse d'images et la comparaison directe des valeurs des éléments d'une image d'un sujet matériel avec celles d'une image d'un sujet matériel similaire (identique ou du même modèle), à partir de la répartition globale d'attributs locaux (texture, couleur, ...) mis en correspondance entre lesdites images.

Ainsi, ces méthodes existantes, comme par exemple divulgué dans le document FR2875628A1, procèdent d'abord à l'identification de descripteurs décrivant convenablement chacune des images, puis procèdent au calcul systématique et indépendant dans chaque image, des points d'intérêt correspondant à ces descripteurs. Cela entraîne la nécessité d'une étape supplémentaire spécifique de mise en correspondance des descripteurs et points d'intérêt, qui est lourde en termes de calculs et pénalisante en temps et en ressources.

Ces méthodes connues de recalage et de reconnaissance connues présentent donc des limitations quant à leur mise en œuvre, en particulier en termes d'efficacité, de vitesse de calcul ou d'adaptabilité à des cas spécifiques. En outre, ces méthodes connues ne discriminent que mal les points d'intérêts pertinents (au sens de l'objectif recherché), des points non-pertinents, c'est-à-dire que ces méthodes connues ont un mauvais ratio signal sur bruit. En effet, ces méthodes sont globalement lentes et peu économes en ressources de calcul de sorte qu'elles sont mal adaptées pour effectuer la mise en relation d'un ensemble d'images disparates, pour les recaler et/ou pour les comparer en vue de les reconnaître ou de les classer selon des classes prédéterminées. Ces méthodes demeurent très difficiles à mettre en œuvre en temps réel sur des terminaux mobiles de type smartphones dès que des performances de reconnaissance fine sont attendues.

Il existe donc un réel besoin de faciliter la mise en relation d'images et d'améliorer ses performances pour permettre de nouvelles applications. La présente invention se propose d'atteindre cet objectif.

Ainsi, la présente invention concerne un procédé de mise en relation d'une partie au moins d'une image candidate avec au moins une image de référence, comprenant les étapes suivantes :
a) mise en œuvre d'un référentiel relationnel comprenant au moins : une liste ordonnée de descripteurs relationnels, au moins un mode de calcul à appliquer aux images pour déterminer des descripteurs de ces images, et un mode de détermination du degré de similarité entre deux descripteurs,
b) mise en œuvre, pour chaque image de référence, d'une liste de référence qui comprend les positions, dites points d'intérêts de référence, dans l'image de référence, de descripteurs de l'image de référence similaires à des descripteurs relationnels issus d'un référentiel relationnel compatible avec celui mis en l'œuvre à l'étape a), laquelle liste de référence est ordonnée en fonction de l'ordre de ce référentiel relationnel compatible, c) détermination, dans l'image candidate, de descripteurs de l'image candidate calculés selon chaque mode de calcul de descripteur du référentiel relationnel mis en œuvre à l'étape a), et détermination de la position de chacun de ces descripteurs dans l'image candidate, d) détermination du degré de similarité, déterminé selon le mode de détermination du référentiel relationnel mis en œuvre à l'étape a), entre chaque descripteur de l'image candidate et chaque descripteur relationnel du référentiel relationnel,
e) détermination d'une liste candidate qui comprend les positions, dites points d'intérêts candidats, dans l'image candidate, des descripteurs de l'image candidate présentant la plus grande similarité avec les descripteurs relationnels du référentiel relationnel mis en œuvre à l'étape a), laquelle liste candidate est ordonnée en fonction de l'ordre de ce référentiel relationnel,
f) traitement de la liste candidate vis-à-vis de chaque liste de référence sur la base de l'ordre des listes candidate et de référence.

Il est à noter qu'au sens de l'invention, les étapes ne sont pas nécessairement réalisées dans l'ordre séquentiel de leur énumération : elles peuvent notamment être réalisées dans l'ordre opposé ou simultanément. Il importe en revanche que l'étape c) soit réalisée avant l'étape d) qui elle-même doit être réalisée avant l'étape e), au moins pour chaque descripteur d'image, ces étapes pouvant être réalisées simultanément et en parallèle pour différents descripteurs d'image. Les étapes c) à e) ne sont cependant pas nécessairement consécutives, dans la mesure où des étapes intermédiaires peuvent bien entendu être intercalées entre ces étapes c) à e), par exemple l'étape b). Enfin, l'étape f) est nécessairement successive à l'élaboration de la liste candidate prévue à l'étape e) ainsi qu'à la mise en œuvre d'au moins une liste de référence prévue à l'étape b).

Au sens de l'invention, il est entendu par « **image** », qu'elle soit candidate ou de référence, tout type d'image au sens général du terme et pas uniquement une image assimilable à une photographie. Autrement dit, une image n'est pas limitée au seul sens d'une image optique résultant de la sollicitation de la région d'authentification par un rayonnement lumineux visible, mais peut au contraire être obtenue par tout type de sollicitation physique parmi lesquelles il est possible notamment de citer : les ultrasons, l'Infra-rouge lointain, les Tera-Hertz, les rayonnements X ou gamma, la tomographie X ou laser, la radiographie X, la résonance magnétique, sans que cette liste ne soit limitative ou exhaustive. Ainsi, au sens de l'invention une image est, par exemple, l'enregistrement du résultat de la stimulation par un moyen quelconque d'une scène naturelle ou d'un sujet matériel. Cet enregistrement pourra alors être qualifié d'image naturelle. Cet enregistrement est susceptible de présenter une seule dimension correspondant alors par exemple à l'enregistrement de la variation dans le temps ou le long d'une ligne d'un signal unique, ou encore enregistrement des valeurs d'une ligne de capteurs. Cet enregistrement est aussi susceptible de posséder deux dimensions comme cela est le cas d'une photographie qui pourra être enregistrée, en demi-tons, en niveau de gris ou encore en couleur. Au sens de l'invention, une « image » peut donc être un signal 1D, une image 2D ou 3D, à niveaux de gris ou en couleur, ou encore un signal à nD (n dimensions), par exemple hyper-spectrale ou RGB-D. Au sens de l'invention, une « image » peut être le résultat d'une acquisition unique ou extraite d'un flux. Ainsi dans le cadre de l'invention, une « image » peut être extraite d'un flux vidéo. Dans un mode de mise en œuvre, l'image peut être sauvegardée sous forme numérique. De plus, une image mise en œuvre dans le procédé selon l'invention peut être une image préalablement segmentée, notamment lorsqu'elle comprend plusieurs sujets matériels dans une même scène ou une répétition d'un même motif. Bien entendu, une image n'est pas nécessairement naturelle et elle peut être de synthèse c'est-à-dire qu'elle peut être générée par un processus informatique avec ou sans l'assistance d'un opérateur humain. Dans le cadre de l'invention, une image naturelle et une image de synthèse ont en commun qu'elles sont dans un même format d'enregistrement numérique ou analogique en vue de leur traitement dans le cadre d'un même processus. Des pré-traitements optiques et\ou numériques d'amélioration de l'image peuvent aussi lui être appliqués pour un meilleur rapport signal à bruit par exemple. Ainsi, il est possible d'appliquer par exemple un zoom optique (dispositifs à focales variables) et/ou numérique pour mieux sélectionner l'échelle d'observation, une déconvolution de l'image afin de supprimer un défaut de mise au point ou un bougé, un filtrage passe-bande pour sélectionner/privilégier les détails de fréquences intermédiaires ou un rehaussement de contraste pour accentuer le contraste.

Une image est qualifiée de « référence » en cela qu'elle est connue préalablement à la mise en œuvre du procédé. L'image de référence est de préférence issue d'une prise de vue réalisée préalablement à la mise en œuvre du procédé. L'image de référence peut également être une image de synthèse c'est-à-dire par exemple une image construite à partir d'images de sujet matériels ou de scènes matérielles, ou une image résultant d'un processus de synthèse informatique pur, ou encore une image combinant ces deux modes de réalisation. L'image de référence fait partie des paramètres choisis a priori dans la mise en œuvre du procédé selon l'invention. L'image de référence est enregistrée, voire certifiée par un tiers de confiance.

Une image est qualifiée de « candidate » en cela qu'elle est mise en œuvre pour questionner son degré de relations locales avec une image de référence. L'image candidate est de préférence une image naturelle en ce qu'elle est le résultat de l'acquisition d'un signal résultant de la stimulation d'un sujet matériel et/ou d'une scène comprenant un ou plusieurs sujets matériels. L'image candidate est généralement, mais non exclusivement, issue d'une acquisition réalisée juste avant la mise en œuvre du procédé selon l'invention.

De préférence, l'image candidate et la (les) image(s) de référence avec laquelle (lesquelles) elle est mise en relation (via le procédé selon l'invention) sont issues d'un même type de sollicitation physique (par exemple une sollicitation par un rayonnement lumineux visible lorsque les images sont issues d'une photographie de sujets matériels en lumière visible globalement diffuse).

Au sens de l'invention, un « **descripteur** » est un objet informatique ou numérique, une structure de données, permettant de rendre compte de certaines propriétés locales d'une image. Ainsi, dans son application à une image, un descripteur est associé à sa localisation dans l'image, c'est-à-dire au lieu ou à la zone de l'image qui présente les caractéristiques définies par le descripteur ou correspondant au descripteur. Dans le cadre de l'invention, cette localisation est aussi appelée « position », point saillant, point remarquable. Les descripteurs peuvent être de natures et/ou de formes différentes. Dans le cas d'une image au sens de photographie ou d'une image en deux dimensions en couleur, les descripteurs peuvent être de nature géométrique, par exemple des coins, des lignes verticales ou horizontales, des lettres ; de nature colorimétrique, par exemple des maxima locaux du gradient de la luminance ou un contraste local ; ou encore de nature spectrale, sans que cette liste ne soit exhaustive. Les descripteurs peuvent aussi être de nature variée à savoir être le résultat d'un processus d'apprentissage automatique ou encore être construits pour une mise en œuvre du procédé de l'invention dans un contexte particulier. Un descripteur peut se présenter sous la forme d'une matrice (un vecteur, un patch, ...) ou encore d'un graphe (planaire ou non, un arbre n-aire ou non, ...) ou tout autre structure de données, par exemple une valeur ou un nombre.

Dans le cadre de l'invention, et par métonymie, un descripteur désigne aussi le résultat d'un mode de calcul qui permet, une fois appliqué aux données constitutives d'une image, de décrire via la structure de données qui correspond au descripteur, des caractéristiques prédéfinies pertinentes au sein de ladite image. Des exemples de modes de calcul de descripteurs sont les suivants : HARRIS, SIFT, SURF, ORB, KAZE, RGB, VGG-16, qui permettent de rechercher par exemple des coins, des éléments invariants aux caractéristiques variées, des couleurs. Un descripteur permet donc de qualifier tout point donné d'une image et son voisinage, en fonction de caractéristique(s) choisie(s) ou apprise(s), par exemple en fonction de la texture ou du contraste local, de la présence d'une forme donnée, de la couleur, de son intensité, ou encore du gradient de couleur, de la distribution locale de l'orientation du gradient d'une composante de l'image, ou de nombreuses autres caractéristiques encore. Un mode de calcul de descripteur d'image, appliqué aux points d'une image, permet d'extraire les éventuels points remarquables, où les caractéristiques locales représentées par le descripteur sont intrinsèquement suffisamment présentes, c'est-à-dire en pratique les points où le degré de pertinence du descripteur issu du mode de calcul est suffisamment élevé. L'ensemble des points remarquables ou saillants constitue usuellement une représentation intrinsèque du contenu de l'image.

En pratique, le mode de calcul de descripteurs d'images permet également de définir les coordonnées qui sont associées aux points remarquables du descripteur dans l'image, dans un système de coordonnées choisi qui est par exemple, dans le cadre des espaces à deux ou trois dimensions, un système de coordonnées cartésiennes, polaires ou cylindriques.

Au sens de l'invention, on entend par « **référentiel** relationnel » un ensemble d'objets informatiques ou numériques permettant une mise en relation d'images, comprenant au moins :
- une liste ordonnée de descripteurs dits « relationnels » ; et
- pour chaque descripteur relationnel de la liste ordonnée, au moins un mode de calcul à appliquer à une image donnée pour déterminer des descripteurs de cette image, et un mode de détermination du degré de similarité entre ledit descripteur relationnel et chacun des descripteurs de l'image associés à ce descripteur relationnel.

Le référentiel relationnel fait partie des paramètres choisis a priori (c'est-à-dire en amont) de la mise en œuvre du procédé selon l'invention.

Ici, deux types de descripteurs sont utilisés : d'une part, des « **descripteurs relationnels** » choisis et ordonnés dans la liste contenue dans le référentiel relationnel, et, d'autre part, des « **descripteurs** » des images de référence et candidates, qui sont le résultat d'un ou plusieurs modes de calcul appliqués respectivement à chacune de ces images.

Les descripteurs relationnels peuvent soit être construits de manière explicite ad-hoc, soit être le résultat d'un mode de calcul appliqué à une image quelconque, distincte des images candidate et de référence. Les descripteurs relationnels de la liste ordonnée du référentiel relationnel peuvent être de natures et/ou de formes différentes. Les descripteurs relationnels sont, quoiqu'il en soi, connus avant la mise en œuvre du procédé selon l'invention.

Les descripteurs des images de référence ou candidate sont quant à eux les résultats issus du (des) mode(s) de calcul qui est (sont) associé(s) aux descripteurs relationnels. En pratique, on sélectionne, parmi ces résultats de calcul, les descripteurs qui sont les plus similaires aux descripteurs relationnels du référentiel relationnel. Cette sélection conduit à identifier, dans l'image de référence ou candidate correspondante, un ensemble de positions, dites « points d'intérêt », qui correspondent aux points remarquables associées aux descripteurs sélectionnés. Au sens de l'invention, un point remarquable ou saillant donné d'une image sera donc appelé « **point d'intérêt** » de cette image, pour ce descripteur d'image, lorsque la (les) caractéristique(s) recherchée(s) associée(s) au descripteur possède(nt) un degré de similarité suffisant avec la (les) caractéristique(s) associée(s) à un des descripteurs relationnels. Un même point d'une image peut potentiellement être détecté plusieurs fois comme point d'intérêt pour différents descripteurs au cours de la mise en œuvre du procédé selon l'invention. Ainsi, au sens de l'invention, un descripteur d'une image de référence ou de l'image candidate constitue un moyen de détection de points d'intérêt dans ces images respectives, lesquels points d'intérêt n'ont pas vocation à représenter intégralement le contenu de l'image mais à contribuer - à travers les n-uplets formés de leurs coordonnées - à une mise en relation de l'image candidate considérée avec une image de référence, via un référentiel relationnel. Le cas échéant, une telle détection de points d'intérêt peut être réalisée à plusieurs échelles, à différentes résolutions d'image, et de manière invariante quelles que soient la pose de la caméra, les variations d'illumination, ou encore les bruits de capture, lors de l'acquisition de l'image.

Ainsi, pour tout descripteur relationnel considéré dans la liste ordonnée du référentiel relationnel, la détection d'un point d'intérêt dans l'image candidate se réalise par application, dans cette image considérée, du mode de calcul associé à un tel descripteur relationnel, afin de déterminer des descripteurs de l'image candidate qui sont fonction des points d'application du mode de calcul dans l'image. En d'autres termes, pour chaque descripteur relationnel constitutif de la liste ordonnée du référentiel relationnel, l'application du mode de calcul associé à ce descripteur relationnel, dans une image, permet, d'une part, de déterminer si cette image comporte au moins un descripteur de cette image, local et robuste, qui présente une nature et une forme semblable à celle du descripteur relationnel, et, d'autre part, de déterminer la position de ce descripteur. Bien entendu, il est tout à fait envisageable que l'image présente plusieurs descripteurs résultants du mode de calcul associé au descripteur relationnel auquel cas plusieurs points d'intérêt potentiels sont détectés.

Lorsqu'au moins un descripteur résulte du mode de calcul associé au descripteur relationnel, on appelle ce descripteur « transitoire ». On compare alors, en général à l'aide d'un calcul, la ressemblance (ou similitude, ou similarité), entre le descripteur relationnel et chaque descripteur transitoire obtenu par le calcul. Pour ce faire, l'invention prévoit de déterminer un degré de similarité entre les descripteurs relationnel et transitoire. De manière préférée, le degré de similarité entre les descripteurs doit être supérieur ou égal à un seuil minimal fixé pour que les descripteurs comparés soient considérés comme similaires (ou semblables). Ce n'est que lorsque les descripteurs sont similaires, que le point est retenu comme un point d'intérêt. Par abus de langage et soucis de simplification, on dit alors que le descripteur relationnel « se retrouve » dans l'image analysée, au niveau du point d'intérêt, ou que le point d'intérêt « est associé » à ce descripteur relationnel, dans l'image analysée. On peut aussi, par exemple, classer les descripteurs transitoires selon ce degré de similarité et en retenir plusieurs pour un même descripteur relationnel, mais à condition de ne retenir que ceux présentant un degré de similarité supérieur à un degré seuil choisi.

Par exemple, un mode de détermination possible du degré de similarité entre deux descripteurs est la mesure d'une distance entre les structures de données représentant chaque descripteur. Dans ce cas, le degré de similarité est la valeur de la distance mesurée, tandis que la mesure du degré de similarité correspond à la nature du calcul de similarité choisi, par exemple le calcul d'une distance au sens de Hamming, de Mahalanobis, de Levenshtein ou encore de Hausdorff.

Par exemple, si le descripteur relationnel est un descripteur de nature colorimétrique décrivant un certain gradient de rouge, le mode de calcul associé à appliquer à l'image candidate peut être choisi comme le mode de calcul RGB. Si ce mode de calcul résulte en un descripteur transitoire qui fournit lui-même une certaine valeur de gradient de rouge, en au moins un point de l'image, il convient alors de comparer les valeurs réelles de gradient de rouge, par exemple par soustraction, et de comparer le résultat obtenu à une valeur seuil fixée pour déterminer si les descripteurs sont similaires.

Dans les cas singuliers où certains descripteurs relationnels ne présentent aucun point d'intérêt associé dans une image donnée, compte tenu d'un degré de similarité entre descripteurs relationnel et transitoires trop faible (selon un seuil choisi), ou encore compte tenu d'un degré de pertinence de descripteurs transitoires trop faibles au sein d'une zone de l'image choisi, un traitement spécifique doit être appliqué pour permettre la constitution et la comparaison des listes candidate et/ou de référence, par exemple en décrétant un état spécifique au rang concerné de la liste. Par abus de langage et soucis de simplification, on dit alors que le descripteur relationnel ne se retrouve pas dans l'image analysée.

Ainsi, pour chaque descripteur relationnel constitutif de la liste ordonnée du référentiel relationnel, l'application de la mesure de degré de similarité à valeurs réelles correspondante entre ledit descripteur relationnel et chacun des descripteurs transitoires calculés dans l'image considérée, permet de classer ces descripteurs transitoires les uns par rapport aux autres afin de déterminer, s'il(s) existe(nt), quel(s) est (sont) le(s) point(s) d'intérêt où se retrouve le descripteur relationnel considéré conformément au degré de similarité souhaité, dans l'image analysée.

Les points d'intérêt obtenus pour l'image candidate et chaque image de référence sont alors conservés dans des listes respectivement appelées « candidate » ou « de référence ». Autrement dit, chacune des listes de référence mises en œuvre à l'étape b) et la liste candidate déterminée à l'étape c) sont obtenues à l'aide des descripteurs relationnels du référentiel relationnel. Une nouvelle liste candidate est générée en général à chaque mise en œuvre d'une nouvelle image candidate au sens de l'invention.

En pratique, chacune des listes de référence et liste candidate comporte donc les coordonnées, dans l'image correspondante, des points d'intérêts où se retrouvent chacun des descripteurs relationnels du référentiel relationnel. Si un descripteur relationnel de la liste ordonnée ne se retrouve pas dans au moins une des images, aucun point d'intérêt ne lui est associé dans cette image, de sorte qu'aucune coordonnées ne lui sont associées dans la liste correspondante. Si un descripteur relationnel se retrouve au contraire en plusieurs points d'intérêt dans l'image, la liste comprendra chacune des coordonnées de ces multiples points d'intérêt. De préférence, on limitera le nombre de points d'intérêt qui peuvent être associés à un descripteur relationnel donné, par exemple à 1, 2, 3, voire davantage selon les besoins. Ce seront alors les points d'intérêt associés aux descripteurs transitoires présentant le degré de similarité le plus élevé avec le descripteur relationnel en question, qui seront conservées dans la liste.

Par « mise en relation » d'images ou de parties d'images, on entend donc, selon l'invention, le fait d'identifier dans chaque image ou partie d'image des positions de points d'intérêts selon des caractéristiques locales prédéfinies (qui sont données par les descripteurs relationnels de chaque référentiel relationnel), et à l'aide de modes de calcul de descripteurs, et de mesures de degrés de similarité entre descripteurs, le tout formant chaque référentiel relationnel. C'est donc le référentiel relationnel (ou les référentiels relationnels et la connaissance de la relation de passage de l'un à l'autre) qui permet la mise en relation entre la liste candidate et chacune des listes de référence, et par voie de conséquence la mise en relation de l'image candidate avec chacune des images de référence. Au sens de l'invention, la mise en correspondance d'images est ainsi une mise en relation spécifique d'images. Au sens de l'invention, on considère que la mise en relation d'une image candidate avec une image de référence est donc effectuée au terme de la détermination de la liste candidate et de sa comparaison avec la liste de référence, sur la base des descripteurs relationnels de la liste ordonnée du référentiel relationnel.

De manière préférée, une image candidate est mise en relation avec plusieurs images de référence, successivement ou parallèlement.

La liste du référentiel relationnel est « ordonnée » en ce que l'on connaît la place (ou rang) de chaque descripteur relationnel dans la liste. On est par exemple capable d'attribuer un numéro à chaque descripteur relationnel en fonction de sa position dans la liste.

L'ordre de chaque liste de référence et de la liste candidate est établi en fonction de l'ordre de la liste de descripteur relationnel du référentiel relationnel. Cela signifie que, bien que les ordres puissent être différents entre toutes ces listes, la relation pour passer d'un ordre à l'autre est connu. Un cas particulier, préféré ici, est le cas où l'ordre de chaque liste de référence et de la liste candidate est établi selon l'ordre de la liste de descripteur relationnel du référentiel relationnel, c'est-à-dire que tous les ordres sont identiques, rang à rang.

Ainsi, l'ordre de la liste des descripteurs relationnels demeure de préférence inchangé pour mettre en relation l'image candidate avec les images de référence. Le fait d'utiliser une même liste de descripteurs relationnels ordonnée pour mettre en relation deux images distinctes, induit implicitement, dans chacune des deux listes, un même ordre pour les points d'intérêt résultant de ces images (lequel ordre est contraint directement ou indirectement par ladite liste de descripteurs relationnels ordonnée). Cet ordre identique, ou à tout le moins connu, facilite la mise en relation des images par l'appariement éventuel de points d'intérêts homologues entre lesdites images, ou encore la détermination d'agrégats de données homologues issus desdites images, comme il sera explicité ci-après. L'ordre est considéré comme « indirectement contraint » par exemple lorsque deux référentiels relationnels distincts mais compatibles sont utilisés pour analyser l'image candidate et l'image de référence, de sorte que l'ordre associé à la liste de référence et l'ordre associé à la liste candidate sont éventuellement différent, mais que la relation qui permet de passer d'un ordre (celui de la liste candidate par exemple) à l'autre (celui de la liste de référence par exemple) est connue. Cette relation existe notamment parce que les référentiels relationnels sont compatibles entre eux, comme il ressort de la description ci-après. Au contraire, l'ordre est « directement contraint », par exemple lorsqu'un même référentiel relationnel est utilisé pour établir chaque liste candidate et de référence, ou lorsque deux référentiels relationnels distincts et compatibles sont utilisés, mais que la différence entre ces référentiels relationnels n'est pas liée à l'ordre des descripteurs relationnels qu'ils comportent respectivement.

Ainsi, grâce au procédé de mise en relation d'images selon l'invention, la détermination des listes de référence et de la liste candidate, contrainte par le choix des descripteurs relationnels qui sont ordonnés dans la liste du référentiel relationnel, permet un appariement séquentiel rapide de points d'intérêt homologues dans ces images.

La présente invention propose donc une nouvelle approche de la mise en relation de points et d'images numériques préalable à tout autre(s) traitement(s) ultérieur(s) de l'image. Cette nouvelle approche améliore les performances des méthodes existantes utilisées pour le recalage d'images, la reconnaissance d'objets et leur classification parmi un grand nombre d'images de référence.

Le procédé selon l'invention, notamment grâce au référentiel relationnel, permet aussi bien la mise en relation d'images disparates, qui n'ont aucun lien entre elles et qui comportent des contenus très différents, par exemple une image représentant un bijou avec une image représentant un paysage ou un ustensile de cuisine, que la mise en relation d'images davantage similaires, par exemple deux modèles de produits d'une même marque.

L'utilisation du référentiel relationnel, permet au procédé de l'invention d'atteindre des vitesses de calcul élevées tout en nécessitant moins de ressources de calcul. Le procédé selon l'invention permet donc d'effectuer en temps réel, y compris au moyen de terminaux mobiles et sur des flux vidéo, des tâches de recalage a priori, de reconnaissance et de classification.

Le procédé selon l'invention évite d'utiliser des méthodes calculatoires extrêmes (par exemple la force brute massive, sur une grande quantité de données) en optimisant les ressources en fonction de la mise en œuvre choisie, par exemple en utilisant partiellement une partie du référentiel relationnel, en première itération, puis une séquence suivante utilisant tout ou autre partie dudit référentiel relationnel.

De manière préférée, le procédé selon l'invention est mis en œuvre de manière à découpler les calculs des listes de référence et le calcul de la liste candidate. De préférence, les listes de référence sont en effet élaborées avant la mise en œuvre du procédé sur l'image candidate, selon un autre procédé de l'invention qui est un procédé d'élaboration d'un ensemble de listes de référence conforme à l'invention. Autrement dit, de préférence, l'image de référence a été analysée sous l'angle du référentiel relationnel avant la mise en œuvre du procédé selon l'invention, de sorte que la liste de référence correspondante est connue préalablement à la mise en œuvre du procédé selon l'invention et à l'analyse de l'image candidate. Ainsi, à l'étape b) du procédé de mise en relation selon l'invention, il suffit d'appeler la liste de référence préétablie, sans avoir besoin de faire appel à l'image de référence elle-même. Cela permet de limiter la quantité d'information manipulée en temps réel en préférant l'utilisation de données sauvegardées au préalable, qui sont ici essentiellement des listes de référence formées de n-uplets de coordonnées de points d'intérêt calculés grâce au référentiel relationnel. Cela engendre un gain de temps supplémentaire lors de la mise en relation de l'image candidate avec cette image de référence, en permettant des calculs réduits à ce moment et un temps de réponse court.

Les calculs selon l'invention sont donc plus rapides, par rapport aux temps de calculs des méthodes déjà connues. Cet avantage est encore décuplé lorsque le procédé est mis en œuvre pour analyser des images successives provenant de séquences vidéo.

Dans la suite sont décrites d'autres caractéristiques avantageuses du procédé de mise en relation conforme à l'invention.

Le procédé selon l'invention utilise un référentiel relationnel choisi, préférentiellement de manière autonome ou optimisée vis-à-vis des images de référence et des images candidates. Cette optimisation peut être réalisée de manière automatique ou humaine, voire en combinant les deux approches (rapidité et précision pour la partie automatique, valeur de l'expérience et du sens pour la partie humaine).

Le référentiel relationnel est qualifié « **d'autonome** » lorsque la liste ordonnée des descripteurs relationnels qu'il contient est choisie sans analyse préalable de l'image candidate ni de chacune des images de référence. Le référentiel relationnel autonome permet de découpler la mise en relation de deux images du contenu respectif de ces images. Le référentiel relationnel est qualifié de « référentiel indirect », lorsqu'il prédéfinit, sans besoin de connaître les images de référence et candidate, les descripteurs relationnels qui vont permettre d'identifier et de positionner les caractéristiques locales associées auxdits descripteurs relationnels.

Le référentiel relationnel est qualifié « d'optimisé » lorsqu'il est choisi selon un pouvoir de discrimination adapté entre les images de références et/ou pour une famille d'images candidates donnée ou attendue. Le référentiel relationnel peut ainsi facilement être modifié ou optimisé en regard de la population d'images de référence voire du type d'image candidate à considérer. Cette optimisation est possible dans la mesure où, selon l'invention, la liste de descripteurs relationnels du référentiel relationnel n'a pas d'objectif de description pertinente du contenu informationnel global de chaque image prise individuellement, mais a pour objectif la localisation de caractéristiques définies a priori (en amont de la mise en œuvre du procédé), de façon respectivement optimisée, par chaque descripteur relationnel, c'est à dire la détermination de point(s) d'intérêt correspondant(s) et in fine d'un ensemble ordonné de coordonnées associées à ces points d'intérêt. Ainsi, le procédé selon l'invention permet de manière aisée de panacher la nature des descripteurs relationnels choisis a priori, et d'adapter au cas d'usage la possibilité de reconnaissance d'une image candidate voire d'authentification de cette image, la possibilité de déterminer l'appartenance d'une image candidate à une famille d'image et par extension la possibilité d'authentifier un sujet matériel présent sur l'image et/ou de déterminer l'appartenance de ce sujet matériel à une famille ou une catégorie de sujets matériels voire de réaliser de manière séquentielle ces différentes tâches.

En particulier, le référentiel relationnel peut être optimisé pour une tâche donnée. Il pourra être différent si la tâche envisagée consiste à recaler les images entre elles, reconnaître des images ou des sujets matériels figurant dans les images, comparer ou encore classifier les images.

Les descripteurs relationnels du référentiel relationnel peuvent aussi être choisis selon des critères de répétabilité et stabilité. Lorsqu'un référentiel relationnel répétable est utilisé plusieurs fois pour déterminer une liste ordonnée à partir d'une image, la liste obtenue est la même à chaque fois par exemple. De manière analogue, lorsque qu'un même référentiel relationnel stable est utilisé plusieurs fois pour déterminer une liste ordonnée à partir de plusieurs images différentes ayant des points communs, certaines ressemblances ressortent des listes obtenues par exemple.

Dans un mode de réalisation, le référentiel relationnel est optimisé par un processus d'apprentissage. Ce processus d'apprentissage peut être de toute nature appropriée, par exemple par algorithmes génétiques ou réseau de neurones, afin d'apporter les performances attendues dans le cas d'usage considéré. Ce processus d'apprentissage peut être mis en œuvre automatiquement avec ou sans assistance humaine.

Selon une caractéristique avantageuse du procédé selon l'invention, la liste ordonnée de descripteurs relationnel du référentiel relationnel est optimisée en fonction au moins des listes de référence mises en œuvre à l'étape b), pour que les coordonnées des points d'intérêt respectifs associés à chaque descripteur relationnel soient différentes d'une image de référence à l'autre. Autrement dit, la liste ordonnée est optimisée pour ne conserver que les descripteurs relationnels qui permettent de discriminer au mieux les images de référence les unes des autres, en ce que les descripteurs relationnels se retrouvent en des points d'intérêt de coordonnées différentes d'une image de référence à l'autre.

Selon une autre caractéristique, la liste de descripteurs relationnels ordonnée du référentiel relationnel est optimisée en fonction des listes de référence mises en œuvre à l'étape b), pour que les répartitions des points d'intérêt correspondants à chacun des descripteurs relationnels dans l'image de référence soient les plus distantes possibles d'une image de référence à l'autre.

Selon une autre caractéristique, la liste ordonnée de descripteurs relationnels est optimisée en fonction des listes de référence mises en œuvre à l'étape b), pour que chaque point d'intérêt associé à un des descripteurs relationnels dans l'image de référence soit localement distribué dans chaque image de référence. En pratique, cela signifie que les descripteurs relationnels se retrouvent chacun en un seul point d'intérêt respectif et distinct dans l'image de référence.

Selon une caractéristique avantageuse du procédé selon l'invention, la liste ordonnée de descripteurs relationnels du référentiel relationnel est optimisée en fonction au moins des listes de référence mises en œuvre à l'étape b), pour que les points d'intérêt au sein de chaque image de référence soient équirépartis. On entend par « équiréparti » le fait que ces points soient répartis de manière aléatoire et relativement uniforme dans les différentes images de référence.

Au sens de l'invention, il est parfaitement envisageable qu'un premier référentiel relationnel soit utilisé pour établir une liste de référence à partir d'une image de référence donnée, et qu'un autre référentiel relationnel, différent du premier, soit utilisé pour établir la liste candidate à partir de l'image candidate, à condition que ces référentiels relationnels demeurent compatibles l'un avec l'autre de façon à ce que le passage d'un référentiel relationnel à l'autre soit possible lors de la mise en relation de l'image candidate avec l'image de référence donnée. On considère que deux référentiels relationnels sont compatibles entre eux lorsqu'ils donnent lieu à une liste de points d'intérêt similaire, selon un critère de similarité choisi (ou une mesure de degré de similarité choisie), après avoir été respectivement utilisé avec une même image étalon. Comme expliqué précédemment, là encore la mesure du degré de similarité revient par exemple à calculer une distance (selon un mode de calcul choisi) entre les listes et à comparer la valeur obtenue à une valeur seuil choisie. En variante, on considère aussi que deux référentiels relationnels sont compatibles entre eux lorsque, d'une part, le premier référentiel relationnel est utilisé pour déterminer respectivement une première et une deuxième liste de points d'intérêt à partir d'une première et deuxième image, et le deuxième référentiel est utilisé pour déterminer respectivement une troisième et une quatrième liste de points d'intérêt à partir desdites première et deuxième images, et que, d'autre part, une première relation existe entre les première et deuxième listes de points d'intérêt et une relation similaire à la première relation existent entre les troisième et quatrième listes de points d'intérêt, selon un critère de similarité choisi. La relation entre listes peut par exemple provenir d'une analyse statistique et/ou d'une analyse géométrique des listes.

Deux référentiels relationnels mis en œuvre au sens de l'invention (l'un pour analyser l'image candidate, l'autre pour analyser une image de référence) peuvent, tout en étant compatibles entre eux, par exemple différer en ce que :
1/ la liste ordonnée de descripteurs relationnels étant identique dans les deux référentiels relationnels, le mode de calcul et/ou la mesure du degré de similarité sont distincts pour au moins un descripteur relationnel, la mesure du degré de similarité restant compatible avec le mode de calcul et ledit descripteur relationnel ; ou,
2/ les listes ordonnées de descripteurs relationnels utilisées dans chaque référentiel relationnel sont de même cardinal et très similaires (sans être identiques) concernant les structures de données de descripteurs relationnels, terme à terme ou prises dans leur ensemble ; ou,
3/ les listes ordonnées de descripteurs relationnels utilisées dans chaque référentiel relationnel sont de même cardinal mais très différentes terme à terme du point de vue des structures de données de descripteurs relationnels, l'ordre et les rangs demeurant compatibles d'une liste à l'autre ; ou,
4/ les listes ordonnées de descripteurs relationnels utilisées dans chaque référentiel relationnel sont de cardinal différent, mais comprennent de nombreux descripteurs relationnels communs (c'est-à-dire ici identiques), et le rang de chaque descripteur relationnel est connu dans chaque référentiel relationnel.

Bien entendu, l'ensemble des caractéristiques avantageuses décrites (ci-avant ou ci-après) en référence au référentiel relationnel utilisé pour analyser l'image candidate s'appliquent aussi au(x) référentiel(s) relationnel(s) compatible(s) utilisés pour analyser les images de référence.

On peut aussi envisager qu'un référentiel relationnel différent soit utilisé pour chaque image distincte mise en œuvre dans le procédé de l'invention, qu'elle soit de référence ou candidate, mais à la condition que tous les référentiels relationnels mis en œuvre sont compatibles entre eux, c'est-à-dire qu'ils comportent a minima un dénominateur commun permettant l'utilisation du procédé.

Par souci de clarté dans la description, les inventeurs ont souhaité maintenir le cas général le plus simple de mise en œuvre, c'est-à-dire celui où un même référentiel relationnel est mis en œuvre pour l'ensemble des images, mais le lecteur est invité à garder en mémoire la possibilité de mettre en œuvre des référentiels relationnels différents au sens de ce qui précède. Ainsi, selon une caractéristique avantageuse du procédé selon l'invention, il est envisageable que chaque liste de référence mise en œuvre à l'étape b) ait été préétablie à partir d'un même et unique référentiel relationnel, compatible avec le référentiel relationnel mis en œuvre à l'étape a) (utilisé pour établir la liste candidate), mais possiblement différent de ce dernier. Au contraire, selon une autre caractéristique avantageuse du procédé selon l'invention, il est envisageable que le référentiel relationnel mis en œuvre à l'étape a) (utilisé pour établir la liste candidate) soit identique au référentiel relationnel utilisé pour établir chaque liste de référence (c'est le cas décrit dans la suite).

Il est à noter que le référentiel relationnel peut, en sus de la liste ordonnée de descripteurs relationnels, et, pour chaque descripteur relationnel, en sus du mode de calcul des descripteurs transitoires et de leur mesure de degré de similarité choisis, comprendre des données supplémentaires telles qu'un nombre maximal (par exemple 1, 2 ou 3 ...) de points d'intérêt où peuvent se retrouver chaque descripteur relationnel, dans l'image candidate, éventuellement dans chaque image de référence. Plus précisément, comme il a été expliqué, le classement des descripteurs résultants du mode de calcul associé à un descripteur relationnel donné, permet de retenir les coordonnées des m points associés au(x) descripteur(s) transitoires dont les degrés de similarité avec le descripteur relationnel en question sont les plus élevés, selon ladite mesure de degré de similarité, ces m points devenant de facto m « points d'intérêt ». Pour tout descripteur relationnel de la liste ordonnée du référentiel relationnel, m points d'intérêt peuvent ainsi être détectés dans l'image au sens de l'invention, m étant en règle générale un nombre entier supérieur ou égal à un. Lorsque l'entier m est strictement supérieur à 1, il est envisageable qu'il fasse partie des paramètres du référentiel relationnel associés au descripteur relationnel dudit référentiel relationnel.

Le référentiel relationnel peut aussi comprendre les coordonnées de certains points où l'on va chercher à appliquer les modes de calcul, dans l'images candidate et éventuellement dans les images de référence, pour trouver quel descripteur relationnel décrit le mieux ce point.

Le référentiel relationnel peut aussi, en sus de la liste ordonnée de descripteurs relationnels, et, pour chaque descripteur relationnel, en sus du mode de calcul des descripteurs transitoires et de leur mesure de degré de similarité choisis, comprendre tout autre type de données supplémentaires sans changer le sens de l'invention.

Par ailleurs, il est parfaitement envisageable, à un rang donné dans la liste ordonnée de descripteurs relationnels du référentiel relationnel, de considérer non pas un seul mais plusieurs modes de calcul différents associés au descripteur relationnel de ce rang. Ainsi, le mode de calcul appliqué à une image candidate et une image de référence, et/ou à différentes images de référence n'est pas nécessairement le même, pour un même descripteur relationnel donné. Lorsque c'est le cas, la ou les images auquel(les) ce mode de calcul est destiné à être appliqué sont indiquées dans un paramètre additionnel au sein du référentiel relationnel.

Selon une autre caractéristique avantageuse du procédé selon l'invention, le référentiel relationnel peut comprendre une classification des descripteurs relationnels, c'est-à-dire leur regroupement en catégorie de manière à former des sous-ensembles de descripteurs relationnels décrivant au moins une caractéristique commune. Par exemple, le référentiel relationnel peut regrouper ensemble les descripteurs relationnels qui vont décrire respectivement des caractéristiques de contours, de couleur ou encore de texture dans l'image.

Dans un mode de réalisation, le référentiel relationnel est obtenu par extraction d'informations depuis une ou plusieurs « images de référentiel », qui peuvent être des images de synthèse ou naturelles.

Pour qu'une image puisse être sélectionnée comme image de référentiel, elle doit comporter des spécificités informationnelles. Les inventeurs ont à ce jour identifié qu'une image contenant une richesse informationnelle (variété des caractéristiques locales et à différentes échelles), couplée à une régionalisation de textures ou micro-textures, ayant des contours variés et une certaine entropie, est potentiellement un bon candidat à devenir une image de référentiel. On dit alors que la liste ordonnée de descripteurs relationnels est issue d'une image de référentiel « visuellement complexe ». Dans une image visuellement complexe, les pixels de pavés voisins sont décorrélés les uns des autres et la répartition des pavés est largement aléatoire tout en étant riche en information, de sorte que des descripteurs différents peuvent qualifier chaque région de cette image. Un exemple de type d'image naturelle pouvant servir d'image de référentiel est illustré dans les figures attachées à cette invention (un iguane dans un environnement de feuillage). A l'inverse, un exemple d'image qui n'est pas idéale, voire pas adaptée, pour déterminer les descripteurs relationnels est une image de bruit de Perlin. L'image de référentiel est distincte de l'image candidate et de chaque image de référence.

Par ailleurs, il est envisageable que les descripteurs relationnels inclus dans la liste ordonnée du référentiel relationnel soient distincts et différents. En pratique, cela signifie qu'ils sont dénombrables et qu'il n'existe pas deux descripteurs relationnels identiques dans la liste ordonnée.

Selon une autre caractéristique avantageuse du procédé selon l'invention, les descripteurs relationnels inclus dans la liste ordonnée du référentiel relationnel sont des vecteurs équirépartis entre eux au sens d'une mesure de degré de similarité définie. Une telle construction peut notamment être réalisée à l'aide d'un procédé de type « k plus proches voisins ».

Selon une caractéristique avantageuse de l'invention, chaque liste de référence est, de préférence, sauvegardée pour un usage ultérieur. Elle peut aussi être modifiée et optimisée entre deux mises en œuvre avec des images candidates.

Selon une caractéristique avantageuse du procédé selon l'invention, la liste candidate peut être sauvegardée pour un traitement ou usage ultérieur. Notamment, le traitement de l'étape f) peut comprendre l'enregistrement de la liste candidate sous une forme exploitable pour une manipulation informatique ou automatique, de préférence sous une forme analogue à celle de la liste de référence correspondante. De manière préférée, la liste de référence comprend un enregistrement des coordonnées de chaque point d'intérêt selon un système de coordonnées déterminé des points d'intérêt de référence. La liste candidate comprend alors l'enregistrement des coordonnées des points d'intérêt candidats selon le même système de coordonnées. Parmi les systèmes de coordonnées il est possible, dans le cadre des espaces à deux ou trois dimensions, de citer notamment le système de coordonnées cartésiennes, le système de coordonnées polaires ou cylindrique.

En variante ou en complément, le traitement de l'étape f) peut comporter le regroupement sous une forme exploitable par un traitement informatique ou automatique de la liste candidate et de chaque liste de référence, toutes déterminées à partir d'une même liste ordonnée de descripteurs relationnels.

Selon une autre caractéristique du procédé selon l'invention, et pour faciliter la suite du procédé, les listes candidate et de référence sont indexées sur la liste ordonnée de descripteurs relationnels, c'est-à-dire que ces listes de référence et candidate comprennent un moyen d'identifier le descripteur relationnel et/ou le rang auquel il est placé dans la liste ordonnée, de manière à savoir quel descripteur relationnel a donné lieu aux coordonnées du point d'intérêt en question. Un tel moyen d'identification peut par exemple être un indicateur du descripteur relationnel lui-même. En variante, le moyen d'identification peut être le numéro qui correspond au rang du descripteur relationnel dans la liste ordonnée du référentiel relationnel. En variante encore, le moyen d'identification peut comprendre le fait d'ordonner les listes de référence et candidate selon le même ordre que la liste ordonnée de descripteurs relationnels.

A l'étape f), le traitement de la liste candidate peut éventuellement comprendre des opérations informatiques ou automatiques plus élaborées, par exemple mettre en correspondance la liste candidate avec la liste de référence, recaler l'image candidate par rapport à l'image de référence, classer les images, calculer des signatures relationnelles entre les images pour une reconnaissance unitaire.

Selon une autre caractéristique de l'invention, le traitement de l'étape f) comprend une étape de détermination de l'existence de points d'intérêt homologues entre la liste candidate et chaque liste de référence. Par « **points d'intérêt homologues** », il convient d'entendre des points d'intérêts associés respectivement à un descripteur de l'image de référence et à un descripteur de l'image candidate tous deux similaires à un même descripteur relationnel du référentiel relationnel (lorsqu'un même référentiel relationnel est utilisé pour analyser chaque image de référence et l'image candidate). Par « similaire », comme il a été dit, on entend que le degré de similitude entre les descripteurs est élevé, selon un critère de similarité choisi. Ainsi, un point d'intérêt candidat est homologue d'un point d'intérêt de référence si les descripteurs de ces points sont tous deux similaires au même descripteur relationnel du référentiel relationnel correspondant. Autrement dit encore, deux points sont homologues (d'une image à l'autre), s'ils sont décrits avec des degrés de similarité du même ordre par le même descripteur relationnel. Ainsi, deux points d'intérêt sont homologues lorsque, l'un étant issu de l'image candidate, l'autre étant issu de l'image de référence, leurs descripteurs transitoires possèdent des degrés de pertinence suffisants et des degrés de similarité du même ordre vis-à-vis du descripteur relationnel associé dans le référentiel relationnel. Deux points d'intérêt homologues n'ont bien entendu pas nécessairement les mêmes coordonnées dans l'image candidate et l'image de référence.

Lorsque les référentiels relationnels utilisés pour analyser chaque image de référence et l'image candidate sont différents mais compatibles, on peut par exemple considérer que deux points d'intérêts sont homologues lorsqu'ils sont positionnés au même rang ou aux rangs correspondants dans chacune des listes.

Dans l'éventualité où des points d'intérêt homologues existent entre les images, il est envisageable de regrouper les coordonnées de ces points d'intérêt homologues sous forme de paires. Dans l'éventualité où un même descripteur relationnel de la liste ordonnée est associé à plusieurs points d'intérêt dans au moins une des images, il est envisageable de générer plusieurs paires de coordonnées pour ce descripteur relationnel, pour couvrir toutes ou parties des combinaisons de points d'intérêt homologues possibles. Il faut bien noter que dans chaque paire de coordonnées, une des coordonnées correspond au point d'intérêt du descripteur relationnel dans l'image candidate, tandis que l'autre des coordonnées correspond au point d'intérêt du descripteur relationnel dans l'image de référence.

Le caractère ordonné de la liste de descripteurs relationnels inclus dans le référentiel relationnel est avantageux pour identifier rapidement les descripteurs relationnels ayant donné lieu à des points d'intérêts homologues dans les listes de référence et liste candidate.

Chacune des listes, candidate ou de référence, peut être analysée sous un aspect statistique par analyse des données simplement manipulables (les coordonnées) qu'elles contiennent, ou encore sous un aspect géométrique par analyse des points d'intérêt.

Ainsi, selon encore une autre caractéristique du procédé selon l'invention, le traitement de l'étape f) comporte, en compléments ou remplacement des traitements déjà décrits, une analyse statistique des points d'intérêt de référence et des points d'intérêt candidats.

Par exemple, l'analyse statistique inclut un calcul statistique entre les coordonnées au sein de chaque liste candidate ou de référence, et/ou entre listes candidate et de référence.

La mise en relation des images comporte alors par exemple, l'établissement d'une relation mathématique entre les coordonnées d'un point d'intérêt de la liste candidate avec les coordonnées du point d'intérêt homologue de la liste de référence, ainsi qu'un calcul statistique sur toutes les relations mathématiques établies pour tous les points d'intérêt homologues d'une liste à l'autre. Par exemple encore, l'analyse statistique peut aussi comporter la comparaison des points d'intérêt d'une des listes et des points d'intérêt de l'autre liste pour voir si certains descripteurs de la liste ordonnée ne donnent lieu à aucun point d'intérêt dans la liste candidate alors qu'ils donnent lieu à au moins un point d'intérêt dans la liste de référence ou inversement.

Plus précisément, selon cette variante dans laquelle le traitement de l'étape f) comporte une analyse statistique, les points d'intérêt sont définis par des coordonnées à m composantes et l'analyse statistique est conduite sur des ensembles chacun formé par les coordonnées ou groupes de coordonnées d'un même rang des points d'intérêt. Ainsi, les coordonnées de la liste (ou groupe de coordonnées), placées au(x) même(s) rang(s) dans les listes analysées, sont traitées d'un point de vue statistique. Ce traitement statistique donne lieu à des agrégats de données dans chacune des listes candidate et de référence. On entend par « **agrégats** de données », le résultat de l'analyse statistique, sous forme de paquets de données regroupées selon des critères choisis. Par exemple, un agrégat peut rassembler les points d'intérêt en fonction de leur position géographique dans l'image candidate ou de référence. Un autre exemple d'agrégat peut être le regroupement de points d'intérêts appartenant à une même texture régionale d'une image. Un autre exemple d'agrégats est l'ensemble des descripteurs n'ayant aucun point d'intérêt dans l'image candidate et/ou dans l'image de référence.

De manière préférée, les ensembles (ou agrégats) chacun formé par les coordonnées ou groupes de coordonnées d'un même rang des points d'intérêt candidats sont classés selon un critère de similarité par rapport aux ensembles chacun formé par les coordonnées ou groupes de coordonnées d'un même rang des points d'intérêts de référence. Ce classement permet d'évaluer la ressemblance entre l'image candidate et l'image de référence. La ressemblance entre les images englobe la ressemblance entre les listes et la ressemblance entre des sujets matériels représentés dans les images.

Ce mode de réalisation selon lequel le traitement de l'étape f) comporte une analyse statistique est particulièrement avantageux lorsque l'image candidate et l'image de référence sont des images prises sous un même angle de vue et à un grandissement similaire, par exemple à l'aide d'une mire. On dit alors que les images sont pseudo recalées ou pré-recalées et leur mise en relation peut être faite efficacement par une analyse statistique. Un exemple plus précis de ce mode de réalisation consiste à calculer la distance séparant le point d'intérêt associé à un descripteur relationnel dans l'image de référence et le point d'intérêt associé à ce même descripteur relationnel dans l'image candidate, c'est-à-dire à calculer la distance entre les coordonnées de deux points d'intérêt homologues.

Selon une autre caractéristique avantageuse du procédé selon l'invention, le traitement de l'étape f) comporte, en complément ou en remplacement des traitements déjà décrits, une analyse géométrique comprenant la mise en correspondance des points d'intérêt candidat de la liste candidate avec les points d'intérêt de référence homologues de chaque liste de référence. Dans le cas où, pour un même descripteur relationnel, plusieurs coordonnées de points d'intérêt sont associées dans une liste respectivement candidate ou de référence, il peut être avantageux de déterminer parmi toutes les combinaisons possibles la meilleure mise en correspondance.

Selon cette variante du traitement de l'étape f), la mise en correspondance est suivie de la détermination d'au moins une transformation géométrique associant les coordonnées définissant les points d'intérêt de la liste candidate aux coordonnées définissant les points d'intérêt homologues de chaque liste de référence.

Selon cette variante, la mise en correspondance comporte la détermination d'au moins une transformation géométrique associant les coordonnées des points d'intérêt de la liste candidate aux coordonnées des points d'intérêt homologues d'une des listes de référence. On peut répéter cette opération avec chaque paire de points d'intérêt homologues entre la liste candidate et une des listes de référence et ainsi déterminer plusieurs transformations géométriques pour tenter d'aligner l'image candidate, avec cette image de référence, et les comparer pour déterminer la meilleure d'entre elles. On peut aussi répéter cette opération avec chacune des listes de référence, et ainsi déterminer plusieurs transformations géométriques pour tenter d'aligner l'image candidate, respectivement avec chacune des images de référence, et les comparer pour déterminer la meilleure d'entre elles.

Le classement de ces transformations géométriques peut s'opérer selon un ou plusieurs critères de qualité prédéterminés pour choisir celle qui est la meilleure pour mettre en relation l'image candidate et cette image de référence.

Les critères de qualité pour déterminer si une transformation géométrique est meilleure que les autres sont par exemple les suivants : l'erreur au sens des moindres carrés entre images transformée et image cible (par exemple respectivement image candidate et image de référence), le nombre de points d'intérêt homologues entre eux, l'envoi d'au moins un nombre donné de points d'intérêt de l'image candidate dans une zone, de surface déterminée (aussi réduite que possible) autour des points d'intérêt homologues de l'image de référence. Par exemple, on recherche un point dans une zone réduite, mais on peut autoriser un certain rayon de tolérance autour du point d'intérêt homologue théorique (dans l'image de référence) que l'on cherche à faire correspondre avec le point d'intérêt homologue (de l'image candidate). En pratique par exemple, on peut considérer que plus le nombre de points d'intérêt homologues en correspondance est grand, chacun dans un rayon de tolérance le plus petit possible autour de leur point d'intérêt homologue respectif, plus le critère de qualité est élevé.

La transformation géométrique recherchée peut par exemple prendre la forme d'une transformation rigide (translation et/ou une rotation et/ou un changement d'échelle), d'une homographie ou toute autre transformation géométrique point à point (rigide ou non-rigide).

Il est aussi envisageable qu'aucune transformation géométrique n'existe entre l'image candidate et l'image de référence, auquel cas ces deux images seront considérées comme trop éloignées l'une de l'autre pour pouvoir être recalées ou comparées, de sorte que leur mise en relation présente pour seul intérêt de pouvoir affirmer qu'elles n'ont aucun lien entre elles.

Le mode de réalisation selon lequel le traitement de l'étape f) comprend une analyse géométrique n'est pas incompatible avec le précédent mode de réalisation selon lequel le traitement comprend une analyse statistique. L'analyse géométrique est préférable lorsque l'image de référence et l'image candidate ne sont pas pseudo-recalées, c'est-à-dire qu'elles ont été prises sans aucune précaution, à savoir que l'image candidate a été prise sans chercher à reproduire la prise de vue de la ou des images de référence.

Bien entendu, il y a autant de transformations géométriques à déterminer qu'il existe d'images de référence avec lesquelles on souhaite mettre en relation l'image candidate. Ces transformations géométriques peuvent également être classées selon un critère de qualité préétabli pour choisir celle des transformations géométriques qui est la meilleure.

Autrement dit, une des images de référence donne accès à la transformation géométrique la plus prometteuse pour la mise en relation de l'image candidate par rapport à cette image de référence, par exemple pour son futur recalage ou la future reconnaissance d'un sujet matériel présent dans l'image candidate.

Selon une caractéristique avantageuse du procédé selon l'invention, chaque transformation géométrique recherchée à l'étape f) est une transformation géométrique directe entre la liste candidate et chaque liste de référence.

Ainsi, on cherche la transformation géométrique qui permet de placer les coordonnées d'un des points d'intérêt de la liste candidate sur ou au plus près des coordonnées du point d'intérêt homologue de chaque liste de référence, et ce pour un maximum de points d'intérêt homologues. Autrement dit, la transformation géométrique doit faire se correspondre au mieux les coordonnées au sein de chaque paire de points d'intérêt homologues.

Selon une autre caractéristique possible du procédé selon l'invention, chaque transformation géométrique recherchée est une transformation géométrique indirecte entre la liste candidate et la liste de référence. Une telle transformation géométrique indirecte est la résultante d'une succession de transformations géométriques entre les coordonnées de la liste candidate et les coordonnées de la liste de référence, via au moins une liste intermédiaire comportant les coordonnées, dans une image intermédiaire quelconque, différente de l'image candidate et de chaque image de référence, de positions de descripteurs de cette image intermédiaire déterminés selon le mode de calcul du référentiel relationnel et similaires aux descripteurs relationnels.

De manière simplifiée, une transformation géométrique indirecte comporte :
- une première transformation géométrique directe entre la liste candidate et la liste intermédiaire, laquelle liste intermédiaire comporte les coordonnées, dans l'image intermédiaire, des éventuels points d'intérêt associés aux descripteurs relationnels de la liste ordonnée du référentiel relationnel, et,
- une deuxième transformation géométrique directe entre la liste de référence et la liste intermédiaire.

Selon une caractéristique avantageuse du procédé selon l'invention, il est prévu d'appliquer la meilleure transformation géométrique à l'image candidate afin de recaler l'image candidate par rapport à l'image de référence. Autrement dit, l'application de la meilleure transformation géométrique permet de recaler cette image candidate par rapport à l'image de référence associée à cette meilleure transformation géométrique.

Le recalage est une technique s'appuyant sur la mise en correspondance d'images ou de parties d'images, ou d'informations extraites de ces images, permettant de comparer, superposer voire de combiner les informations respectives contenues dans ces images, parties d'images ou d'informations extraites de ces images.

Selon une autre caractéristique avantageuse du procédé selon l'invention, il est prévu de mettre en œuvre une étape de détermination de l'appartenance de l'image candidate à une classe prédéterminée. Cette étape est en général postérieure au traitement selon lequel on détermine une transformation géométrique permettant de passer de l'image candidate à l'image de référence, ou encore, alternativement, est en général postérieure à une étape d'analyse statistique.

La classe d'appartenance est représentée respectivement par la liste de référence, ou l'image de référence, ou le sujet matériel représenté dans l'image de référence, le ou la plus proche au sens d'un critère d'appartenance choisi. Ainsi, une classe d'appartenance est définie par différentes caractéristiques de la classe. C'est la similarité avec chacune, ou l'ensemble, de ces caractéristiques, appelée ici « critère d'appartenance », qui détermine l'appartenance à la classe. Ainsi, vérifier le critère d'appartenance à une classe peut par exemple consister à évaluer la distance, vis-à-vis de la caractéristique choisie, entre la liste candidate et chaque liste de référence. Par exemple, le critère d'appartenance peut être considéré comme validé pour la ou les plus courtes distances permettant de rejoindre la liste de référence à partir de la liste candidate. Cette distance entre listes peut être conjointement utilisée avec un seuil d'acceptation défini. Cela revient à comparer la distance évaluée avec un seuil d'acceptation défini. Au-dessus du seuil d'acceptation, la liste candidate n'appartient pas à la classe d'appartenance correspondant à la liste de référence, en-dessous elle appartient à cette classe.

Il est tout à fait envisageable que la liste candidate (ou l'image candidate ou le sujet matériel représenté dans l'image candidate) n'appartienne à aucune classe prédéfinie.

On entend par « classe » un ensemble de propriétés caractéristiques d'une liste de référence, ou d'une image de référence, ou encore d'un sujet matériel représenté dans l'image de référence. Une classe peut contenir un ou plusieurs éléments (par exemple la classe d'un produit spécifique identifiée par son numéro de série unitaire (1 élément isolé), la classe des produits de série d'un même modèle (de nombreux éléments constitutifs), la classe des produits d'une même marque, la classe des composants constitutifs d'un produit assemblé, etc. Une classe comportant un seul et unique membre peut être mise en œuvre pour de l'authentification. On parlera alors de classe unitaire. Une classe peut être nommée, et/ou associée à une personne ou une organisation (par exemple la classe des sujets matériels appartenant à une date définie à une personne ou une organisation), voire à une autre classe. Une classe peut être reconfigurable, et dépendre du choix du référentiel relationnel. Les propriétés caractéristiques de la classe peuvent bien entendu être plus ou moins spécifiques. Une classe peut elle-même être divisée en sous-classes, disjointes ou non, incluses dans la classe de sorte que chaque sous-classe comporte seulement certains des éléments de la classe. Ainsi, chaque classe peut être un ensemble plus ou moins vaste, et inclure différentes sous-classes. La classe peut être reconfigurable dans le temps, auquel cas on considère que la classe reconfigurée est une nouvelle classe, bien qu'elle puisse éventuellement avoir des caractéristiques identiques, notamment un nom identique.

Selon une caractéristique avantageuse du procédé selon l'invention, il est envisageable que certaines au moins des images de référence soient des images construites représentatives d'au moins deux sujets matériels distincts appartenant à une même classe de sujets matériels.

Une image construite provient par exemple de la superposition, après recalage par exemple, de deux images représentants deux sujets matériels d'une même classe, et de l'élimination des parties distinctes pour ne garder que les parties communes à ces deux images. Utiliser une image construite représentative de plusieurs sujets distincts appartenant à la même classe permet d'éliminer les spécificités de chaque sujet pour ne conserver que les traits communs à tous les sujets. Autrement dit, l'image de référence construite utilisée permet de lisser le bruit existant dans chaque image de sujet singulier. Selon une caractéristique avantageuse du procédé selon l'invention, il est aussi envisageable que certaines au moins des images de référence soient des images construites représentatives d'au moins deux sujets matériels distincts appartenant à des classes distinctes de sujets matériels.

Ainsi, lorsque chaque image de référence est respectivement représentative d'une classe de sujets matériels, il est envisageable d'utiliser le traitement de la liste candidate ou de l'image candidate pour qualifier l'appartenance d'un sujet candidat représenté dans l'image candidate à la classe de sujets matériels qui est représentée par l'image de référence correspondante.

En pratique, un score peut être établi pour chaque transformation géométrique permettant de passer de l'image candidate à une des images de référence, sur la base de critères préétablis. Le score obtenu donne une première idée de la ressemblance entre l'image de référence et l'image candidate. La ressemblance entre les images englobe la ressemblance entre les listes et/ou la ressemblance entre des sujets matériels représentés dans les images.

Selon une autre caractéristique avantageuse du procédé selon l'invention, une étape de reconnaissance unitaire de l'image candidate peut être mise en œuvre.

De préférence, cette étape de reconnaissance unitaire est postérieure à l'étape de recalage. Il est notamment envisageable que l'étape de reconnaissance unitaire postérieure au recalage comprenne un procédé de détermination d'une empreinte relationnelle entre les deux images candidate et de référence, tel que décrit dans le document WO2017198950.

En variante, il est aussi envisageable que l'étape de reconnaissance unitaire postérieure au recalage comprenne une étape de soustraction de points entre l'image candidate recalée et chaque image de référence.

En variante, et selon une caractéristique avantageuse du procédé selon l'invention, l'étape de reconnaissance unitaire de l'image candidate comprend l'itération des étapes a) à f) avec d'autres images de référence et/ou un autre référentiel relationnel comportant une autre liste de descripteurs relationnels ordonnée et/ou d'autres modes de calcul et/ou d'autres modes de détermination du degré de similarité.

Ainsi, après avoir établi un premier lien de classe entre l'image candidate et l'image de référence, il est possible de venir préciser à quelle sous-classe le sujet matériel représenté dans l'image candidate appartient, en réitérant les étapes a) et f) du procédé, selon les différentes caractéristiques avantageuses décrite ci-dessus. Cette itération se fait en prenant d'autres images de référence et/ou un autre référentiel relationnel. Cette itération permet d'affiner la reconnaissance du sujet matériel représenté dans l'image candidate pour finalement aboutir à une reconnaissance unitaire du sujet matériel.

Selon une caractéristique avantageuse du procédé selon l'invention, il est envisageable que chaque itération des étapes a) à f) soit mise en œuvre sur une zone d'intérêt de l'image candidate qui présente une surface réduite par rapport à la surface totale de la partie de l'image candidate initialement mise en relation.

Cette caractéristique permet de s'intéresser à certains détails potentiels du sujet matériel représenté dans l'image candidate, une fois un premier recalage mis en œuvre.

L'invention concerne aussi une utilisation du procédé de mise en relation décrit pour reconnaître différents éléments sur un parcours en vue d'établir une collection numérique de contenus digitaux, lesdites images de référence étant choisies en fonction des éléments à reconnaître sur le parcours.

Plus précisément, selon cette utilisation, on reconnaît successivement la classe d'appartenance (unitaire ou non) de différents éléments : sujets matériels ou parties d'un même sujet matériel. Les différents éléments reconnus peuvent par exemple être chaque face d'une boîte d'emballage, chaque élément constitutif d'une montre. Dans cette utilisation du procédé, les images de référence sont alors choisies en fonction des classes d'appartenance voulues. Selon cette utilisation du procédé, il est ainsi possible de suivre le parcours de l'utilisateur (au sens de la temporalité et/ou de l'espace environnant). Le parcours peut être, au choix, imposé, ce qui signifie qu'il faut reconnaître d'abord un élément donné avant de pouvoir reconnaître un autre élément, ou libre ce qui signifie qu'il est possible de reconnaître les différents éléments dans un ordre quelconque, sur l'intégralité du parcours ou une partie seulement, voire même qu'un élément au moins peut être reconnu plusieurs fois.

Selon cette utilisation, chaque élément reconnu est associé à un contenu numérique choisi, soit en lien direct avec l'objet, soit sans lien avec celui-ci. Par exemple, le contenu numérique peut comporter le titulaire de l'élément, et/ou un message destiné à l'utilisateur ayant reconnu l'élément, et/ou un jeton cryptographique (« Token » en anglais) susceptible d'être utilisé dans des processus informatiques du type des processus à chaîne de blocs (« BlockChain » en anglais).

Ainsi, les différents éléments reconnus le long du parcours conduisent à une collection qui peut être associée soit au contenu numérique préétabli énoncé ci-avant, soit à la collection numérique des éléments eux-mêmes. Les données faisant partie de la collection sont par exemple : le sujet matériel ou la partie du sujet matériel reconnu, la classe d'appartenance de ce sujet, le contenu numérique associé à ce sujet, le jeton cryptographique associé à ce sujet...

Selon une utilisation préférentielle, la reconnaissance successive de chaque élément peut déclencher l'accès au contenu numérique (statique ou dynamique) associé à chaque élément, et l'ensemble des contenus numériques rencontrés sur un parcours peut être rassemblé en une collection de contenus numériques. Cette collection de contenus numérique pourra avantageusement être gérée par l'intermédiaire de jetons cryptographiques sauvegardés en chaîne de blocs (« BlockChain »), connus sous le nom de jetons non fongible (ou NFT pour « Non-Fungible Tokens » en anglais). Cette mise en œuvre particulière permet de gérer de manière fiable et sûre la propriété des collections et, par voie de conséquence, des éléments constitutifs de ces collections. Cette mise en œuvre permet aussi de suivre les transferts de propriété de manière automatique et sûre.

Selon une caractéristique avantageuse de cette utilisation, il est prévu, préalablement à la reconnaissance des éléments, d'enregistrer dans une mémoire, le contenu digital qui est associé à chaque élément.

Selon une autre caractéristique avantageuse de cette utilisation, il est prévu, postérieurement à la reconnaissance des éléments, d'enregistrer dans une mémoire ou un registre (tel qu'une chaîne de blocs), l'accès et/ou le transfert de propriété de l'élément, et/ou la création d'un jeton cryptographique, et/ou l'accès à un jeton cryptographique associé à l'élément.

Selon une autre caractéristique avantageuse de cette utilisation, il est prévu une étape de reconnaissance de l'utilisateur et/ou du dispositif utilisé pour générer l'image candidate, préalablement à la reconnaissance des éléments.

L'invention concerne aussi un procédé d'élaboration d'une liste de référence comportant les étapes suivantes :
- la mise en œuvre d'un référentiel relationnel comprenant au moins : une liste ordonnée de descripteurs relationnels, au moins un mode de calcul à appliquer à l'image de référence pour déterminer des descripteurs de cette image, et un mode de détermination du degré de similarité entre deux descripteurs, et
- la détermination de descripteurs de l'image de référence, calculés selon chaque mode de calcul de descripteur du référentiel relationnel, et de la position de chacun de ces descripteurs dans l'image de référence,
- la détermination du degré de similarité, déterminé selon le mode de détermination du référentiel relationnel, entre chaque descripteur de l'image de référence et chaque descripteur relationnel du référentiel relationnel,
- la détermination d'une liste de référence comprenant les positions, dites points d'intérêt de référence, dans l'image de référence, de chaque descripteur de l'image de référence présentant la plus grande similarité avec le descripteur relationnel correspondant et qui est ordonnée en fonction de l'ordre du référentiel relationnel.

Ce procédé permet d'établir au moins une liste de référence, de préférence une banque de listes de référence, préalablement à la mise en œuvre du procédé de mise en relation selon l'invention, ce qui génère un gain de temps considérable lors de la mise en œuvre du procédé de mise en relation avec une image candidate.

Ce procédé est très semblable aux étapes c) à e) du procédé de mise en relation selon l'invention, si ce n'est qu'une image de référence est utilisée au lieu de l'image candidate, et que le référentiel relationnel utilisé n'est pas nécessairement identique au référentiel relationnel utilisé pour établir l'image candidate, à condition qu'il soit compatible avec celui utilisé pour établir la liste candidate. De préférence cela dit, les référentiels relationnels sont identiques.

Selon une caractéristique avantageuse de ce procédé d'élaboration, un ensemble de listes de référence est élaboré par itération des étapes de détermination, à partir de la mise en œuvre de référentiels relationnels compatibles les uns avec les autres, de préférence à partir d'un même et unique référentiel relationnel.

Ce procédé peut avantageusement être mis en œuvre en mode informatique distribué via un environnement dit « nuage » (« cloud » en anglais) pour les calculs et les comparaisons avec les listes de référence, ces dernières pouvant être avantageusement aussi être stockées dans ce même nuage. Ce procédé peut avantageusement utiliser des smartphones pour se connecter à cet environnement et transmettre les images candidates ou le résultat de calculs effectués sur ces images candidates. De même, ce procédé peut largement utiliser des chaînes de blocs (« Blockchains » en anglais) afin de renforcer la sécurité des données digitales mises en œuvre.

Bien entendu, les différentes caractéristiques, variantes et formes de réalisation de chaque procédé selon l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig. 1] est une représentation schématique d'un référentiel relationnel utilisé dans le procédé de mise en relation selon l'invention,
[Fig. 2] est une représentation schématique de certaines étapes du procédé de mise en relation selon l'invention,
[Fig. 3] est une représentation schématique d'un exemple de mise en relation (étape f) du procédé de mise en relation selon l'invention,
[Fig. 4] est une représentation schématique d'un autre exemple de mise en relation (étape f) du procédé de mise en relation selon l'invention, et
[Fig. 5] est une représentation imagée du procédé de mise en relation et du procédé de mise en relation conformes à l'invention.

Il est à noter que sur ces figures les éléments structurels et/ou fonctionnels communs aux différentes variantes ou exemples présentent les mêmes références.

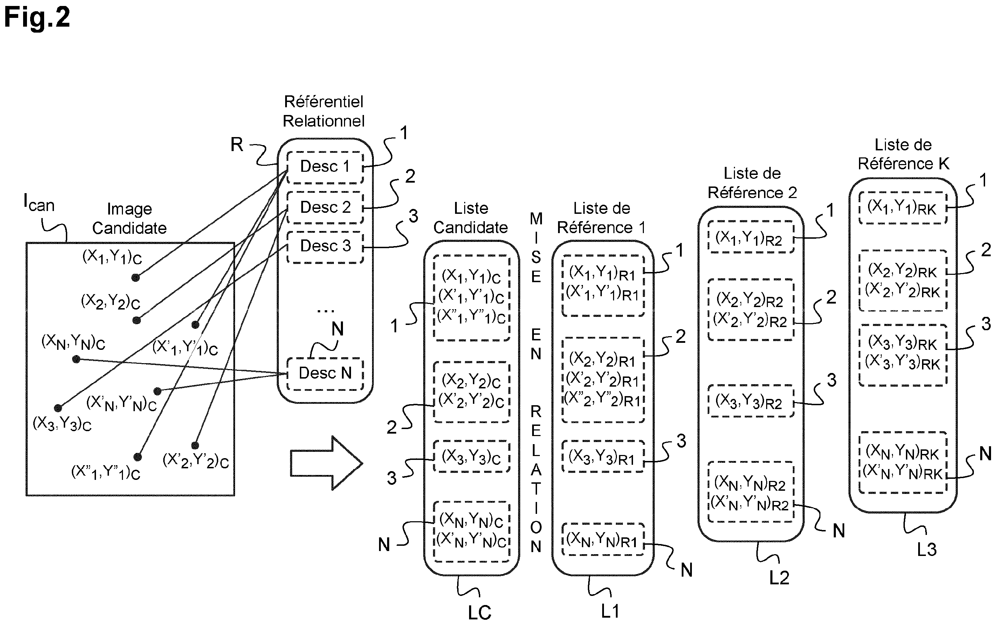

Sur la figure 2, on a représenté les étapes principales d'un procédé de mise en relation d'une partie au moins d'une image candidate Ican avec au moins une image de référence, conforme à l'invention.

Selon ce procédé, il est prévu de réaliser les étapes suivantes :
a) mise en œuvre d'un référentiel relationnel comprenant au moins : une liste ordonnée de descripteurs relationnels, au moins un mode de calcul à appliquer à l'image pour déterminer des descripteurs de cette image, et un mode de détermination du degré de similarité entre deux descripteurs,
b) mise en œuvre, pour chaque image de référence, d'une liste de référence qui comprend les positions, dites points d'intérêt de référence, dans l'image de référence, de descripteurs de l'image de référence similaires à des descripteurs relationnels issus d'un référentiel relationnel compatible au référentiel relationnel mis en œuvre à l'étape a), laquelle liste de référence est ordonnée en fonction de l'ordre de ce référentiel relationnel compatible,
c) détermination, dans l'image candidate, de descripteurs de l'image candidate calculés selon chaque mode de calcul de descripteur du référentiel relationnel mis en œuvre à l'étape a), et de la position de chacun de ces descripteurs dans l'image candidate,
d) détermination du degré de similarité, déterminé selon le mode de détermination du référentiel relationnel mis en œuvre l'étape a), entre chaque descripteur de l'image candidate et chaque descripteur relationnel de ce référentiel relationnel,
e) détermination d'une liste candidate qui comprend les positions, dites points d'intérêt candidats, dans l'image candidate, des descripteurs de l'image candidate présentant la plus grande similarité avec les descripteurs relationnels du référentiel relationnel mis en œuvre à l'étape a), laquelle liste candidate est ordonnée en fonction de l'ordre de ce référentiel relationnel, et
f) traitement de la liste candidate vis-à-vis de chaque liste de référence sur la base de l'ordre des listes candidate et de référence.

Ce procédé de mise en relation est réalisé à l'aide d'un support informatique tel qu'un processeur.

Comme le montre la figure 2, il est donc d'abord prévu de mettre en œuvre un référentiel relationnel R préétabli (étape a).

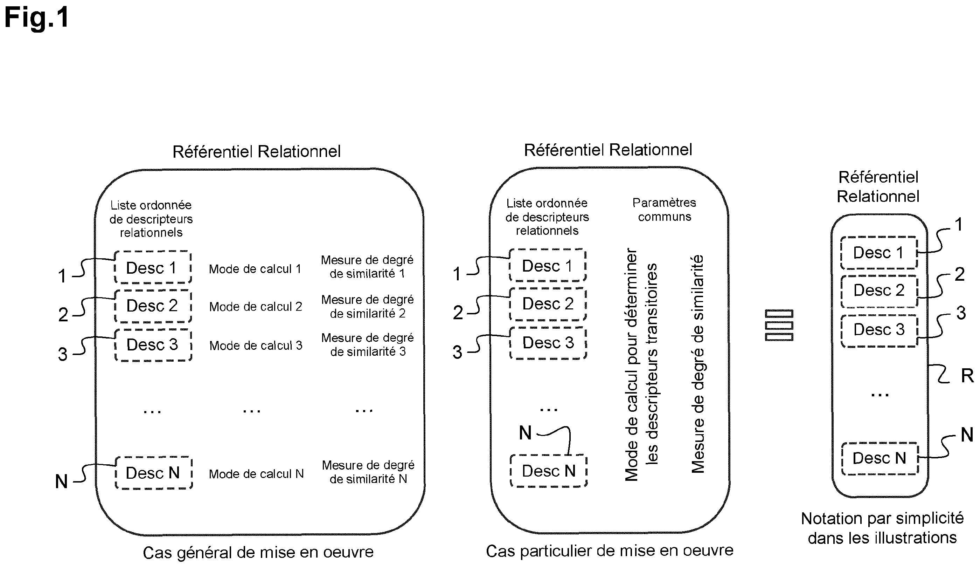

Ce référentiel relationnel R est illustré à la figure 1. Il comporte une liste ordonnée de descripteurs relationnels Desc 1, Desc 2, Desc 3, ..., Desc N, ainsi qu'un mode de calcul et un mode de détermination du degré similarité associés à chacun de ces descripteurs relationnels. L'ordre est donné par les références 1, 2, 3, ..., N et représenté par les encadrements en pointillés sur la figure 1.

Le mode de calcul associé à un descripteur relationnel est destiné à être appliqué à une image et résulte en un descripteur local de cette image qui décrit des caractéristiques prédéfinies pertinentes de l'image qui sont situées en un ou plusieurs points saillants de l'image. Ce descripteur local est appelé « descripteur transitoire » de l'image.

Le mode de détermination du degré de similarité entre deux descripteurs permet de comparer la similitude entre le descripteur relationnel et le descripteur transitoire issu du mode de calcul associé à ce descripteur relationnel. Le degré de similarité est d'autant plus élevé que les descripteurs comparés sont similaires. Par exemple, un mode de détermination possible du degré de similarité est la mesure d'une distance, au sens de Hamming, de Mahalanobis, de Levenshtein ou encore de Hausdorff, selon le critère de similarité choisi. Autrement dit, le degré de similarité est la valeur de la distance mesurée, tandis que le critère de similarité est la nature du calcul de similarité choisi, (par exemple calcul d'une distance au sens de Hamming, de Mahalanobis, de Levenshtein ou encore de Hausdorff).

De préférence, on considère que les descripteurs relationnel et transitoire comparés sont similaires si le degré de similarité obtenu par le mode de détermination est supérieur ou égal à un seuil minimal fixé.

Dans le cas général, on considère que le mode de calcul associé à un descripteur relationnel peut être identique ou différent d'un descripteur relationnel à l'autre et que le mode de détermination du degré de similarité entre deux descripteurs peut lui aussi être identique ou différent d'un descripteur relationnel à l'autre. Ainsi, dans le référentiel relationnel R, il peut y avoir au maximum autant de modes de calcul et de modes de détermination du degré de similarité que de descripteurs relationnels.

Dans un cas particulier non représenté, on utilise le même mode de calcul associé à tous les descripteurs relationnels, et le même mode de détermination du degré de similarité. Dans ce cas particulier, il y a un unique mode de calcul et un unique mode de détermination du degré de similarité.

Comme le montre la figure 2, il est ensuite prévu d'utiliser le référentiel relationnel R illustré à la figure 1 en vue de déterminer une liste, appelée liste candidate Lc, répertoriant les positions, ici sous forme de coordonnées, de points d'intérêt où se retrouvent les descripteurs relationnels, dans une image candidate Ican que l'on souhaite analyser (étapes c à e).

L'image candidate Ican est par exemple une photographie prise à l'aide d'un appareil photo de téléphone portable. Cette image est par exemple enregistrée dans une mémoire.

Plus précisément, à l'étape c), on détermine les descripteurs de l'image candidate. Pour ce faire, on applique les modes de calcul du référentiel relationnel à l'image candidate, de manière à déterminer les descripteurs de l'image candidate, appelés à ce stade « descripteurs transitoires ». A cette même étape, on détermine aussi la position des descripteurs transitoires dans l'image candidate, ces positions étant par exemple obtenues par le même calcul que celui mis en œuvre pour déterminer les descripteurs transitoires.

A l'étape d), on estime ensuite le degré de similarité entre chaque descripteur transitoire trouvé et le descripteur relationnel associé au mode de calcul utilisé (lorsque que chaque descripteur relationnel est associé à son propre descripteur relationnel), ou avec chaque descripteur transitoire trouvé et chaque descripteur relationnel du référentiel relationnel (lorsqu'on utilise un unique mode de calcul pour l'ensemble des descripteurs relationnels). De préférence, à cette étape, on classe les descripteurs transitoires en fonction de leur degré de similarité avec chaque descripteur relationnel pris individuellement, pour pouvoir trouver le ou les descripteur(s) transitoire(s) le(s) plus similaire(s) à conserver pour chaque descripteur relationnel.

Lorsque deux descripteurs transitoires et relationnels sont considérés comme similaires, le point saillant de l'image analysée où est localisé le descripteur transitoire est retenu comme un point d'intérêt de cette image, pour ce descripteur relationnel. On considère alors que le descripteur relationnel « se retrouve » dans l'image analysée, au niveau du point d'intérêt. Comme le montre la figure 2, il est tout à fait envisageable de retrouver au moins un des descripteurs relationnels en plusieurs points d'intérêt distincts de l'image candidate Ican. Par exemple, le premier descripteur relationnel Desc1 du référentiel relationnel R se retrouve en trois points d'intérêt distincts de l'image candidate Ican : (x₁, y₁)_{C}, (x'₁, y'₁)_{C} et (x"₁, y"₁)_{C}; le deuxième descripteur relationnel Desc2 se retrouve en deux points d'intérêt distincts de l'image candidate Ican : (x₂, y₂)_{C} et (x'₂, y'₂)_{C}; le troisième descripteur relationnel Desc3 se retrouve en un seul point d'intérêt de l'image candidate Ican (x₃, y₃)_{C}; et le n-ième descripteur relationnel DescN se retrouve en deux points d'intérêt distincts de l'image candidate Ican : (x_{N}, Y_{N})_{C} et (x'_{N}, y'_{N})_{C}.

A l'étape e), on incorpore la position de chaque point d'intérêt, c'est-à-dire ici les coordonnées de chaque point d'intérêt dans la liste candidate Lc. Cette incorporation se fait en fonction de l'ordre des descripteur relationnels donné dans la liste ordonnée du référentiel relationnel R, c'est-à-dire qu'on connaît la relation entre l'ordre de la liste candidate Lc et l'ordre de la liste de descripteur relationnel. En particulier, ici, on ordonne la liste candidate selon l'ordre de la liste de descripteur relationnel, c'est-à-dire en respectant l'ordre des descripteur relationnels donné dans la liste ordonnée du référentiel relationnel R. Cet ordre est symbolisé par les encadrements en pointillés dans la liste candidat et dans la liste ordonnée.

Comme le montre la figure 2, il est ensuite prévu de mettre en relation la liste candidate Lc obtenue pour l'image candidate Ican avec au moins une liste de référence L1, L2, L3.

De manière préférée, chaque liste de référence L1, L2, L3 est obtenue à partir d'une image de référence Iréf1, Iréf2, ... Iréfk, selon le même principe que celui décrit ci-dessus pour obtenir la liste candidate Lc, si ce n'est que le référentiel relationnel utilisé peut être différent de celui utilisé pour obtenir la liste candidate Lc, dans la mesure où il reste compatible avec le référentiel relationnel utilisé pour établir la liste candidate Lc. Ici, par soucis de simplification, on considère que le référentiel relationnel utilisé pour établir les listes de référence L1, L2, L3 et la liste candidate Lc sont identiques.

Les listes de référence L1, L2, L3 sont de préférence obtenues préalablement à la mise en œuvre du procédé de mise en relation selon l'invention. Ainsi, il suffit d'appeler (ou mettre en œuvre) les listes de référence L1, L2, L3 préétablies dans le procédé de mise en relation selon l'invention (étape b).

Plus précisément, pour établir chaque liste de référence L1, L2, L3, on met en œuvre un procédé d'élaboration d'une liste de référence à partir d'une image de référence Réf1, Iréf2, ... Iréfk, conforme à l'invention.

Selon ce procédé d'élaboration, on réalise les étapes suivantes:
- la mise en œuvre d'un référentiel relationnel comprenant au moins : une liste ordonnée de descripteurs relationnels Desc1', Desc2', Desc3', ..., DescN', au moins un mode de calcul à appliquer à l'image de référence pour déterminer des descripteurs de cette image, et un mode de détermination du degré de similarité entre deux descripteurs, et
- la détermination de descripteurs de l'image de référence, calculés selon chaque mode de calcul de descripteur du référentiel relationnel, et de la position de chacun de ces descripteurs dans l'image de référence,
- la détermination du degré de similarité, déterminé selon le mode de détermination du référentiel relationnel, entre chaque descripteur de l'image de référence et chaque descripteur relationnel Desc1', Desc2', Desc3', ..., DescN' du référentiel relationnel,
- la détermination d'une liste de référence comprenant les positions, dites points d'intérêt de référence, dans l'image de référence, de chaque descripteur de l'image de référence présentant la plus grande similarité avec le descripteur relationnel Desc1', Desc2', Desc3', ..., DescN' correspondant et qui est ordonnée en fonction de l'ordre du référentiel relationnel.

Dans ce procédé d'élaboration, le référentiel relationnel R utilisé est le même que celui utilisé dans le procédé de mise en relation, de sorte que la liste de descripteur Desc1', Desc2', Desc3', ..., DescN' est ici identique à la liste de descripteurs Desc1, Desc2, Desc3, ... DescN.

On considère que la liste de référence est ordonnée en fonction de l'ordre des descripteurs relationnel du référentiel relationnel dans la mesure où on connaît la relation entre l'ordre de la liste de référence et l'ordre de la liste de descripteurs relationnel. Un cas particulier mis en œuvre ici consiste à considérer que l'ordre de la liste de référence est identique à l'ordre des descripteurs relationnels, c'est-à-dire que la liste de référence est ordonnée selon l'ordre de la liste de descripteur relationnel.

Les images de référence utilisées sont par exemple (et de préférence) obtenues à partir d'une sollicitation analogue à celle utilisée pour obtenir l'image candidate Ican, à savoir ici d'un appareil photo.

Une fois les listes de référence L1, L2, ... Lk obtenues, elles sont donc mises en œuvre à l'étape b) du procédé de mise en relation selon l'invention.

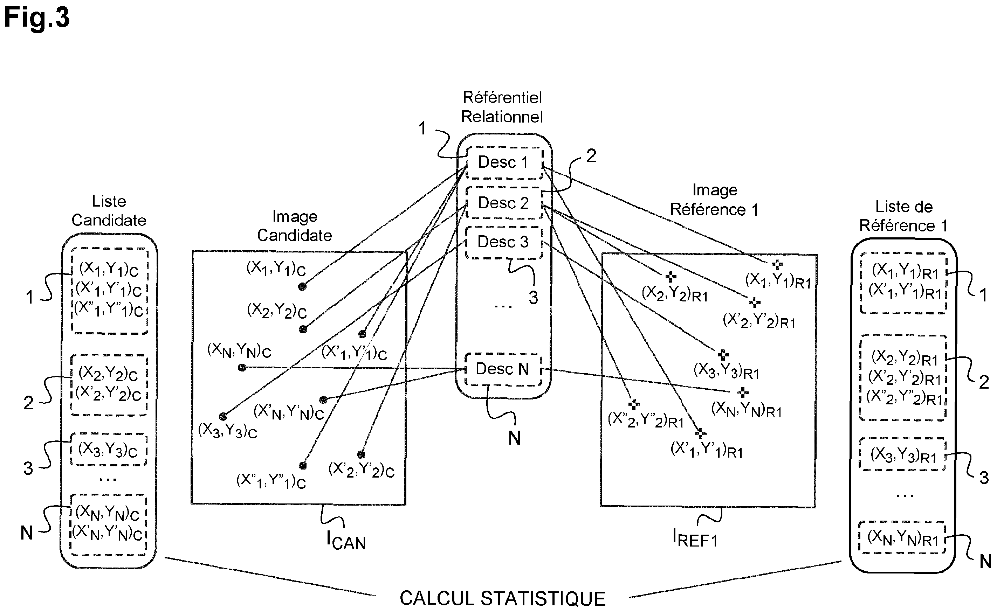

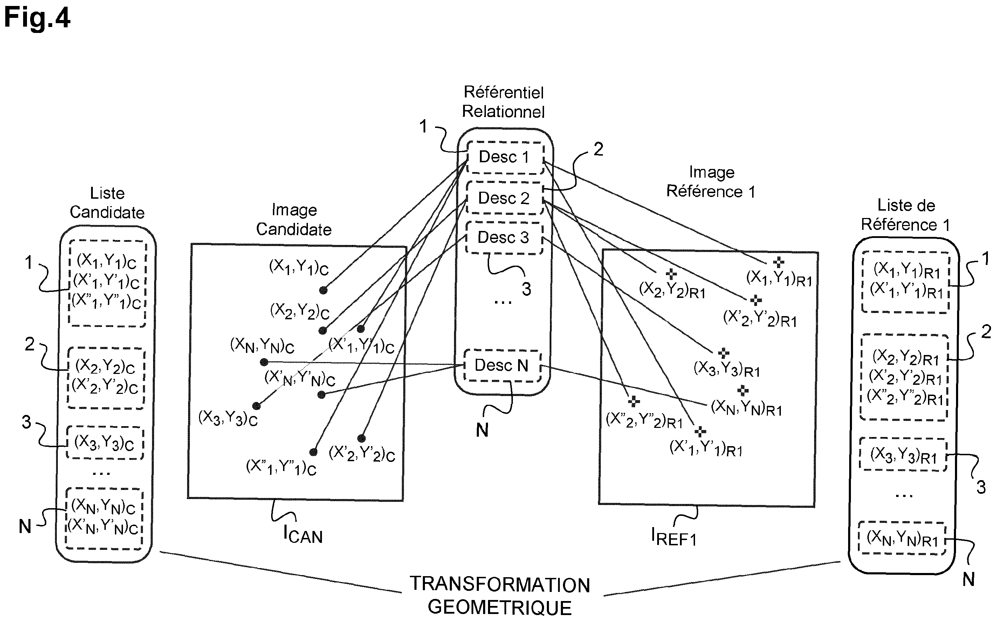

Les figures 3 et 4 illustrent deux exemples différents de mise en relation entre les listes candidate Lc et de référence L1, L2, L3, à savoir une mise en relation par calcul statistique et une autre mise en relation par détermination d'une transformation géométrique.

Que ce soit pour l'un ou l'autre exemple de mise en relation, il est préférable de commencer par identifier les points d'intérêt homologues entre la liste candidate et chacune des listes de références. En pratique, les points d'intérêt homologues sont facilement identifiables dans les listes, dans la mesure où ces listes sont ordonnées en fonction de l'ordre de la liste de descripteurs relationnels du référentiel relationnel. Les points d'intérêt homologues sont donc représentés par les coordonnées situées au même rang dans les listes respectives. Ainsi, toutes les coordonnées placées au rang 1, c'est-à-dire celles où se retrouve le descripteur relationnel Desc1 sont les coordonnées de points d'intérêt homologues au sens de l'invention, et il en va de même pour les coordonnées placées au(x) rang(s) 2, 3, et N suivant(s). L'identification des points d'intérêt homologues revient donc en quelques sortes à faire se correspondre les encadrements en pointillés situés au même rang dans la liste candidat et dans la liste de référence, étant entendu que lorsqu'aucun point d'intérêt n'a été associé dans l'image candidate Ican (respectivement dans une au moins des images de référence Iréf1, Iréf2, ..., Iréfk) à un des descripteurs relationnels de la liste ordonnée, la liste candidate (respectivement au moins une des listes de référence) comportent un rang laissé vide.

Le calcul statistique (illustré à la figure 3) permet d'analyser et comparer les coordonnées des points homologues enregistrées dans la liste candidate à celles enregistrées dans la liste de référence, rang par rang.

La transformation géométrique (illustrée à la figure 4) tente de replacer chaque point d'intérêt de la liste candidate sur un point d'intérêt homologue de la liste de référence. La transformation géométrique peut par exemple prendre la forme d'une homographie, mais ce n'est pas la seule transformation géométrique envisageable. La transformation géométrique peut notamment comprendre une translation et/ou une rotation et/ou un changement d'échelle.

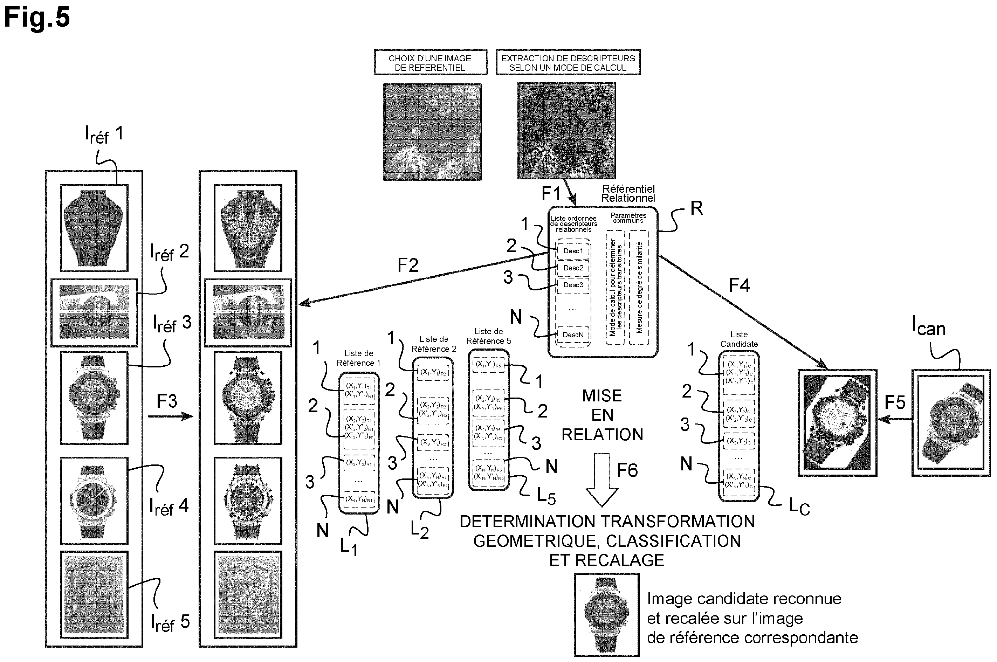

La figure 5 illustre les procédés de mise en relation et d'élaboration de listes de référence conformes à l'invention.

Dans cette illustration, le référentiel relationnel R est obtenu à partir d'une image de référentiel complexe, de laquelle sont extraits les descripteurs relationnels Desc1, Desc2, Desc3, ..., DescN. Plus particulièrement, un mode de calcul choisi, ici le mode Accelerated KAZE (ou A-Kaze) est appliqué à l'image de référentiel (flèche F1 de la figure 5), et résulte en les descripteurs relationnels qui décrivent avec pertinence l'image de référentiel. L'image de référentiel représente ici un iguane dans un environnement de feuillage. Cette image de référentiel est visuellement complexe dans la mesure où les pixels de pavés voisins sont décorrélés les uns des autres et la répartition des pavés est largement aléatoire tout en étant riche en information, de sorte que des descripteurs relationnels différents qualifient chaque région de cette image.

Le mode de calcul inclus dans le référentiel relationnel est ici le même que le mode de calcul utilisé pour déterminer les descripteurs relationnels à partir de l'image de référentiel.

Selon une variante non représentée, il est tout à fait envisageable de construire de toute pièce les descripteurs relationnels du référentiel relationnel, sans passer par l'extraction desdits descripteurs relationnels à partir d'une image de référentiel.

Une fois le référentiel relationnel R établit, le procédé d'élaboration des listes de référence L1, L2, ..., L5 est mis en œuvre (flèche F2 sur la figure 5). Dans cet exemple, le procédé d'élaboration est mis en œuvre à partir des 5 images de référence Iréf1, Iréf2, Iréf3, Iréf4, Iréf5, auxquelles on applique le mode de calcul du référentiel relationnel (flèche F2). Les images de référence représentent chacune une classe de sujets matériels. Plus particulièrement, la première image de référence Iréf1 représente un premier modèle de montre, la deuxième image de référence Iréf2 représente la classe des gobelets jetables, la troisième image de référence Iréf3 représente un second modèle de montre, la quatrième image de référence Iréf4 un troisième modèle de montre, et la cinquième image de référence Iréf5 représente une classe de timbres de poste.

Par application du mode de calcul, on détermine les coordonnées des points d'intérêts où se retrouve chaque descripteur relationnel Desc1, Desc2, Desc3, ... DescN dans chaque image de référence Iréf1, Iréf2, Iréf3, Iréf4, Iréf5. Les points d'intérêt sont représentés par des points bleus dans les images de référence traitées.

Les coordonnées des points d'intérêt des images de référence respectives Iréf1, Iréf2, Iréf3, Iréf4, Iréf5 sont alors enregistrées dans des listes de référence L1, L2, ..., L5 respectives. Dans les listes de références, l'ordre (1, 2, 3, ..., N) de la liste ordonnée des descripteurs relationnels Desc1, Desc2, Desc3, DescN du référentiel relationnel R est respecté.

Le procédé de mise en relation est ensuite mis en œuvre (flèche F4). En particulier, une image candidate Ican est capturée ou récupérée. On applique alors à cette image candidate Ican le mode de calcul du référentiel relationnel R (flèche F5) pour en extraire les points d'intérêt où se retrouvent les descripteurs relationnels du référentiel relationnel. Cela revient à réaliser les étapes c) à e) du procédé de mise en relation précédemment détaillées.

Les coordonnées des points d'intérêt de l'image candidate Ican sont alors enregistrées dans une liste candidate Lc. Dans la liste candidate Lc, l'ordre (1, 2, 3, ..., N) de la liste ordonnée des descripteurs relationnels Desc1, Desc2, Desc3, DescN du référentiel relationnel R est respecté. L'enregistrement de la liste candidate Lc se fait sous une forme exploitable pour une manipulation informatique ou automatique, de préférence sous une forme analogue à celle des listes de référence L1, L2, ..., L5.

Enfin, la liste candidate Lc est mise en relation avec chaque liste de référence L1, L2, ..., L5 (flèche F6). Ici, la mise en relation consiste à apparier les points d'intérêt de la liste candidate Lc avec les points d'intérêt homologues de chaque liste de référence L1, L2, ..., L5, puis à déterminer la meilleure transformation géométrique permettant de faire se correspondre les points d'intérêts homologues.

Ici, la meilleure transformation géométrique est une rotation et une mise à l'échelle de l'image candidate Ican. La détermination de cette meilleure transformation géométrique permet alors de déterminer l'appartenance de l'image candidate Ican à une des classes représentées par les images de référence Iréf1, Iréf2, Iréf3, Iréf4, Iréf5. En l'occurrence, l'image candidate appartient à la classe représentée par la troisième image de référence Iréf3. L'application de la transformation géométrique permet de recaler l'image candidate Ican sur l'image de référence Iréf3.

Il est à tout fait envisageable ensuite, d'itérer les procédés de mise en relation et d'élaboration selon l'invention, avec d'autres images de référence et/ou un autre référentiel relationnel.

Ainsi, après avoir établi un premier lien de classe entre l'image candidate Ican et la troisième image de référence Iréf3, il est possible de venir préciser à quelle sous-classe le sujet matériel représenté dans l'image candidate Ican appartient, en réitérant, d'une part le procédé d'élaboration de listes de référence pour établir de nouvelles listes à partir de nouvelles images appartenant à la classe représentée par la troisième image, et représentant des sous-classe de cette classe, et, d'autre part, le procédé de mise en relation selon l'invention. Cette itération se fait ici en prenant le même référentiel relationnel R, mais il serait tout à fait envisageable d'en changer également. Cette itération permet d'affiner la reconnaissance du sujet matériel représenté dans l'image candidate. En itérant encore les procédés selon l'invention, on aboutit ainsi à une reconnaissance unitaire du sujet matériel.

Cela n'est pas représenté, mais il est tout à fait envisageable que l'itération soit mise en œuvre sur une zone d'intérêt de l'image candidate Ican qui présente une surface réduite par rapport à la surface totale de la partie de l'image candidate initialement mise en relation.

Cela n'est pas représenté non plus, mais il est avantageux d'utiliser le procédé de mise en relation selon l'invention pour reconnaître différents sujets matériels sur un parcours préétabli en vue d'établir une collection numérique d'objets, lesdites images de référence étant choisies en fonction dudit parcours préétabli.

## Revendications

1. Procédé de mise en relation d'une partie au moins d'une image candidate (Ican) avec au moins une image de référence (Iréf1, Iréf2, Iréf3, Iréf4, Iréf5, ..., Iréfk), comprenant les étapes suivantes :
a) mise en œuvre d'un référentiel relationnel (R) comprenant au moins : une liste ordonnée de descripteurs relationnels (Desc1, Desc2, Desc3, ..., DescN), au moins un mode de calcul à appliquer à l'image candidate pour déterminer des descripteurs de cette image candidate, et un mode de détermination du degré de similarité entre deux descripteurs,
b) mise en œuvre, pour chaque image de référence (Iréf1, Iréf2, Iréf3, Iréf4, Iréf5, ..., Iréfk), d'une liste de référence (L1, L2, ..., L5, ..., Lk) qui comprend les positions, dites points d'intérêt de référence, dans l'image de référence (Iréf1, Iréf2, Iréf3, Iréf4, Iréf5, ..., Iréfk), de descripteurs de l'image de référence similaires à des descripteurs relationnels (Desc1', Desc2', Desc3', ..., DescN') issus d'un référentiel relationnel compatible avec le référentiel relationnel (R), laquelle liste de référence (L1, L2, ..., L5, ..., Lk) est ordonnée en fonction de l'ordre (1, 2, 3, ..., N') de ce référentiel relationnel compatible,
c) détermination, dans l'image candidate (Ican), de descripteurs de l'image candidate calculés selon chaque mode de calcul de descripteur du référentiel relationnel (R) mis en œuvre à l'étape a), et de la position de chacun de ces descripteurs dans l'image candidate (Ican),
d) détermination du degré de similarité, déterminé selon le mode de détermination du référentiel relationnel (R) mis en œuvre à l'étape a) entre chaque descripteur de l'image candidate (Ican) et chaque descripteur relationnel (Desc1, Desc2, Desc3, ..., DescN) du référentiel relationnel (R) mis en œuvre à l'étape a),
e) détermination d'une liste candidate (Lc) qui comprend les positions, dites points d'intérêt candidats, dans l'image candidate (Ican), des descripteurs de l'image candidate présentant la plus grande similarité avec les descripteurs relationnels (Desc1, Desc2, Desc3, ..., DescN) du référentiel relationnel (R) mis en œuvre à l'étape a), laquelle liste candidate (Lc) est ordonnée en fonction de l'ordre (1, 2, 3, ..., N) de ce référentiel relationnel (R),
f) traitement de la liste candidate (Lc) vis-à-vis de chaque liste de référence (L1, L2, ..., L5, ..., Lk) sur la base de l'ordre des listes candidate et de référence.

2. Procédé de mise en relation selon la revendication 1, selon lequel chaque liste de référence (L1, L2, ..., L5, ..., Lk) mise en œuvre à l'étape b) a été préétablie à partir d'un même et unique référentiel relationnel, compatible avec le référentiel relationnel (R) mis en œuvre à l'étape a).

3. Procédé de mise en relation selon la revendication 2, selon lequel le référentiel relationnel (R) mis en œuvre à l'étape a) est identique au référentiel relationnel utilisé pour établir chaque liste de référence (L1, L2, ..., L5, ..., Lk).

4. Procédé de mise en relation selon l'une des revendications 1 à 3, selon lequel le traitement de l'étape f) comprend l'enregistrement de la liste candidate (Lc) sous une forme exploitable pour une manipulation informatique ou automatique, de préférence sous une forme analogue à celle de la liste de référence (L1, L2, ..., L5, ..., Lk) correspondante.

5. Procédé de mise en relation selon l'une des revendications 1 à 4, selon lequel le traitement de l'étape f) comprend une étape de détermination de l'existence de points d'intérêts homologues entre la liste candidate et chaque liste de référence.

6. Procédé de mise en relation selon l'une des revendications 1 à 5, selon lequel le traitement de l'étape f) comporte une analyse statistique des points d'intérêt de référence de chaque liste de référence (L1, L2, ..., L5, ..., Lk) et des points d'intérêt candidats.

7. Procédé de mise en relation selon la revendication 6, selon lequel les points d'intérêt sont définis par des coordonnées à m composantes et l'analyse statistique est conduite sur des ensembles chacun formé par les coordonnées ou groupes de coordonnées d'un même rang des points d'intérêt.

8. Procédé de mise en relation selon la revendication 7, selon lequel les ensembles chacun formé par les coordonnées ou groupes de coordonnées d'un même rang des points d'intérêts candidats sont classés selon un critère de similarité par rapport aux ensembles chacun formé par les coordonnées ou groupes de coordonnées d'un même rang des points d'intérêts de référence.

9. Procédé de mise en relation selon l'une des revendications 5 à 8, selon lequel le traitement de l'étape f) comporte une analyse géométrique comprenant la mise en correspondance des points d'intérêt candidat de la liste candidate (Lc) avec les points d'intérêt de référence homologues de chaque liste de référence (L1, L2, ..., L5, ..., Lk).

10. Procédé de mise en relation selon la revendication 8, comprenant une étape de détermination de l'appartenance de l'image candidate (Ican) à une classe prédéterminée.

11. Procédé de mise en relation selon la revendication 10, comprenant une étape de reconnaissance unitaire de l'image candidate (Ican).

12. Utilisation du procédé de mise en relation selon l'une des revendications 10 et 11 pour reconnaître différents éléments sur un parcours en vue d'établir une collection numérique de contenus digitaux, lesdites images de référence étant choisies en fonction des éléments à reconnaître sur le parcours.

13. Utilisation selon la revendication 12, selon laquelle il est prévu, préalablement à la reconnaissance des éléments, d'enregistrer dans une mémoire, le contenu digital qui est associé à chaque élément.

14. Utilisation selon l'une des revendications12 et13, selon laquelle il est prévu, postérieurement à la reconnaissance des éléments, d'enregistrer dans une mémoire ou un registre, l'accès et/ou le transfert de propriété de l'élément, et/ou la création d'un jeton cryptographique, et/ou l'accès à un jeton cryptographique associé à l'élément.

15. Procédé d'élaboration d'une liste de référence (L1, L2, ..., L5, ..., Lk) à partir d'une image de référence (Iréf1, Iréf2, Iréf3, Iréf4, Iréf5, ..., Iréfk) comprenant les étapes suivantes:
- la mise en œuvre d'un référentiel relationnel comprenant au moins : une liste ordonnée de descripteurs relationnels (Desc1', Desc2', Desc3', ..., DescN'), au moins un mode de calcul à appliquer à l'image de référence (Iréf1, Iréf2, Iréf3, Iréf4, Iréf5, ..., Iréfk) pour déterminer des descripteurs de cette image, et un mode de détermination du degré de similarité entre deux descripteurs, et
- la détermination de descripteurs de l'image de référence, calculés selon chaque mode de calcul de descripteur du référentiel relationnel, et de la position de chacun de ces descripteurs dans l'image de référence,
- la détermination du degré de similarité, déterminé selon le mode de détermination du référentiel relationnel, entre chaque descripteur de l'image de référence et chaque descripteur relationnel du référentiel relationnel,
- la détermination d'une liste de référence comprenant les positions, dites points d'intérêt de référence, dans l'image de référence (Iréf1, Iréf2, Iréf3, Iréf4, Iréf5, ..., Iréfk), de chaque descripteur de l'image de référence présentant la plus grande similarité avec le descripteur relationnel (Desc1', Desc2', Desc3', ..., DescN') correspondant et qui est ordonnée en fonction de l'ordre du référentiel relationnel.

## Patentansprüche

1. Verfahren zur Verknüpfung mindestens eines Teils eines Kandidatenbildes (Ican) mit mindestens einem Referenzbild (Iréf1, Iréf2, Iréf3, Iréf4, Iréf5,..., Iréfk), das die folgenden Schritte umfasst:
a) Bereitstellen eines relationalen Referenzsystems (R), das mindestens umfasst: eine geordnete Liste von relationalen Deskriptoren (Desc1, Desc2, Desc3,..., DescN), mindestens einen Berechnungsmodus, der auf das Kandidatenbild anzuwenden ist, um Deskriptoren dieses Kandidatenbildes zu bestimmen, und einen Modus zur Bestimmung des Ähnlichkeitsgrades zwischen zwei Deskriptoren,
b) Bereitstellen, für jedes Referenzbild (Iréf1, Iréf2, Iréf3, Iréf4, Iréf5,..., Iréfk), einer Referenzliste (L1, L2,..., L5,..., Lk), die die Positionen, sogenannte Referenzpunkte von Interesse, in dem Referenzbild (Iréf1, Iréf2, Iréf3, Iréf4, Iréf5,..., Iréfk), von Deskriptoren des Referenzbildes, die ähnlich zu relationalen Deskriptoren (Desc1', Desc2', Desc3',..., DescN') aus einem mit dem relationalen Referenzsystem (R) kompatiblen relationalen Referenzsystem sind, umfasst, wobei die Referenzliste (L1, L2,..., L5,..., Lk) gemäß der Ordnung (1, 2, 3,..., N') dieses kompatiblen relationalen Referenzsystems geordnet ist,
c) Bestimmen, in dem Kandidatenbild (Ican), von Deskriptoren des Kandidatenbildes, die gemäß jedem Berechnungsmodus für Deskriptoren des in Schritt a) bereitgestellten relationalen Referenzsystems (R) berechnet werden, und der Position jedes dieser Deskriptoren in dem Kandidatenbild (Ican),
d) Bestimmen des Ähnlichkeitsgrades, bestimmt gemäß dem Bestimmungsmodus des in Schritt a) bereitgestellten relationalen Referenzsystems (R), zwischen jedem Deskriptor des Kandidatenbildes (Ican) und jedem relationalen Deskriptor (Desc1, Desc2, Desc3,..., DescN) des in Schritt a) bereitgestellten relationalen Referenzsystems (R),
e) Bestimmen einer Kandidatenliste (Lc), die die Positionen, sogenannte Kandidatenpunkte von Interesse, in dem Kandidatenbild (Ican), der Deskriptoren des Kandidatenbildes umfasst, die die größte Ähnlichkeit mit den relationalen Deskriptoren (Desc1, Desc2, Desc3,..., DescN) des in Schritt a) bereitgestellten relationalen Referenzsystems (R) aufweisen, wobei die Kandidatenliste (Lc) gemäß der Ordnung (1, 2, 3,..., N) dieses relationalen Referenzsystems (R) geordnet ist,
f) Verarbeiten der Kandidatenliste (Lc) gegenüber jeder Referenzliste (L1, L2,..., L5,..., Lk) auf der Grundlage der Ordnung der Kandidaten- und Referenzlisten.

2. Verfahren zur Verknüpfung nach Anspruch 1, wobei jede in Schritt b) bereitgestellte Referenzliste (L1, L2,..., L5,..., Lk) anhand eines gleichen und einzigen relationalen Referenzsystems, das mit dem in Schritt a) bereitgestellten relationalen Referenzsystem (R) kompatibel ist, vorab erstellt wurde.

3. Verfahren zur Verknüpfung nach Anspruch 2, wobei das in Schritt a) bereitgestellte relationale Referenzsystem (R) identisch mit dem relationalen Referenzsystem ist, das zur Erstellung jeder Referenzliste (L1, L2,..., L5,..., Lk) verwendet wurde.

4. Verfahren zur Verknüpfung nach einem der Ansprüche 1 bis 3, wobei die Verarbeitung von Schritt f) das Speichern der Kandidatenliste (Lc) in einer für eine rechnerische oder automatische Verarbeitung nutzbaren Form, vorzugsweise in einer der entsprechenden Referenzliste (L1, L2, ..., L5, ..., Lk) analogen Form, umfasst.

5. Verfahren zur Verknüpfung nach einem der Ansprüche 1 bis 4, wobei die Verarbeitung von Schritt f) einen Schritt zur Bestimmung der Existenz von homologen Punkten von Interesse zwischen der Kandidatenliste und jeder Referenzliste umfasst.

6. Verfahren zur Verknüpfung nach einem der Ansprüche 1 bis 5, wobei die Verarbeitung von Schritt f) eine statistische Analyse der Referenzpunkte von Interesse jeder Referenzliste (L1, L2, ..., L5, ..., Lk) und der Kandidatenpunkte von Interesse umfasst.

7. Verfahren zur Verknüpfung nach Anspruch 6, wobei die Punkte von Interesse durch Koordinaten mit m Komponenten definiert sind, und die statistische Analyse an Sätze durchgeführt wird, die jeweils durch die Koordinaten oder Koordinatengruppen eines gleichen Rangs der Punkte von Interesse gebildet sind.

8. Verfahren zur Verknüpfung nach Anspruch 7, wobei die Sätze, die jeweils durch die Koordinaten oder Koordinatengruppen eines gleichen Rangs der Kandidatenpunkte von Interesse gebildet sind, gemäß einem Ähnlichkeitskriterium in Bezug auf die Sätze, die jeweils durch die Koordinaten oder Koordinatengruppen eines gleichen Rangs der Referenzpunkte von Interesse gebildet sind, klassiert sind.

9. Verfahren zur Verknüpfung nach einem der Ansprüche 5 bis 8, wobei die Verarbeitung von Schritt f) eine geometrische Analyse umfasst, die die Zuordnung der Kandidatenpunkte von Interesse der Kandidatenliste (Lc) mit den homologen Referenzpunkten von Interesse jeder Referenzliste (L1, L2, ..., L5, ..., Lk) umfasst.

10. Verfahren zur Verknüpfung nach Anspruch 8, das einen Schritt zur Bestimmung der Zugehörigkeit des Kandidatenbildes (Ican) zu einer vorbestimmten Klasse umfasst.

11. Verfahren zur Verknüpfung nach Anspruch 10, das einen Schritt zur unitären Erkennung des Kandidatenbildes (Ican) umfasst.

12. Verwendung des Verfahrens zur Verknüpfung nach einem der Ansprüche 10 und 11, um verschiedene Elemente entlang einer Strecke zu erkennen, um eine digitale Sammlung von digitalen Inhalten zu erstellen, wobei die Referenzbilder in Abhängigkeit von den auf der Strecke zu erkennenden Elementen ausgewählt werden.

13. Verwendung nach Anspruch 12, wobei vorgesehen ist, vor der Erkennung der Elemente, den digitalen Inhalt, der jedem Element zugeordnet ist, in einem Speicher zu speichern.

14. Verwendung nach einem der Ansprüche 12 und 13, wobei vorgesehen ist, nach der Erkennung der Elemente, den Zugang und/oder die Eigentumsübertragung des Elements, und/oder die Erstellung eines kryptographischen Tokens, und/oder den Zugang zu einem kryptographischen Token, der dem Element zugeordnet ist, in einem Speicher oder einem Register zu speichern.

15. Verfahren zur Erstellung einer Referenzliste (L1, L2, ..., L5, ..., Lk) aus einem Referenzbild (Iréf1, Iréf2, Iréf3, Iréf4, Iréf5,..., Iréfk), das die folgenden Schritte umfasst:
- Bereitstellen eines relationalen Referenzsystems, das mindestens umfasst: eine geordnete Liste von relationalen Deskriptoren (Desc1', Desc2', Desc3',..., DescN'), mindestens einen Berechnungsmodus, der auf das Referenzbild (Iréf1, Iréf2, Iréf3, Iréf4, Iréf5,..., Iréfk) anzuwenden ist, um Deskriptoren dieses Bildes zu bestimmen, und einen Modus zur Bestimmung des Ähnlichkeitsgrades zwischen zwei Deskriptoren, und
- Bestimmen von Deskriptoren des Referenzbildes, die gemäß jedem Berechnungsmodus für Deskriptoren des relationalen Referenzsystems berechnet werden, und der Position jedes dieser Deskriptoren in dem Referenzbild,
- Bestimmen des Ähnlichkeitsgrades, bestimmt gemäß dem Bestimmungsmodus des relationalen Referenzsystems, zwischen jedem Deskriptor des Referenzbildes und jedem relationalen Deskriptor des relationalen Referenzsystems,
- Bestimmen einer Referenzliste, die die Positionen, sogenannte Referenzpunkte von Interesse, in dem Referenzbild (Iréf1, Iréf2, Iréf3, Iréf4, Iréf5,..., Iréfk), jedes Deskriptors des Referenzbildes umfasst, der die größte Ähnlichkeit mit dem entsprechenden relationalen Deskriptor (Desc1', Desc2', Desc3',..., DescN') aufweist und die gemäß der Ordnung des relationalen Referenzsystems geordnet ist.

## Claims

1. Method for the correlation of at least part of a candidate image (Ican) with at least one reference image (Iref1, Iref2, Iref3, Iref4, Iref5,..., Irefk), comprising the following steps:
a) implementing a relational database (R) comprising at least: an organized list of relational descriptors (Desc1, Desc2, Desc3,..., DescN), at least one calculation method to be applied to the candidate image in order to determine the descriptors of this candidate image, and a method for determining the degree of similarity between two descriptors,
b) implementing, for each reference image (Iref1, Iref2, Iref3, Iref4, Iref5,..., Irefk), a list of reference (L1, L2,..., L5,..., Lk) that comprises the positions, said reference points of interest, within the reference image (Iref1, Iref2, Iref3, Iref4, Iref5,..., Irefk), reference image descriptors similar to the relational descriptors (Desc1', Desc2', Desc3',..., DescN') from a relational database compatible with the relational database (R), which list of reference (L1, L2,..., L5,..., Lk) is organized according to the order (1, 2, 3,..., N') of this compatible relational database,
c) determining, in the candidate image (Ican), candidate image descriptors calculated according to each calculation method for the descriptor from the relational database (R) implemented in step a), and the position of each of these descriptors in the candidate image (Ican),
d) determining the degree of similarity, determined according to the method of determination of the relational database (R) implemented in step a) between each candidate image descriptor (Ican) and each relational descriptor (Desc1, Desc2, Desc3,..., DescN) from the relational database (R) implemented in step a),
e) determining a candidate list (Lc) that comprises the positions, said candidate points of interest, in the candidate image (Ican), candidate image descriptors presenting the greatest similarity with the relational descriptors (Desc1, Desc2, Desc3,..., DescN) from the relational database (R) implemented in step a), which candidate list (Lc) is organized according to the order (1, 2, 3,..., N) of this relational database (R),
f) processing the candidate list (Lc) regarding each list of reference (L1, L2,..., L5,..., Lk) on the basis of the order of the candidate lists and the list of reference.

2. The method for correlation according to claim 1, whereby each list of reference (L1, L2,..., L5,..., Lk) implemented in step b) was pre-established based on a same and unique relational database, compatible with the relational database (R) implemented in step a).

3. The method for correlation according to claim 2, whereby the relational database (R) implemented in step a) is identical to the relational database used to establish each list of reference (L1, L2,..., L5,..., Lk).

4. The method for correlation according to one of claims 1 to 3, whereby the processing of step f) comprises recording the candidate list (Lc) in a form suitable for computer or automated processing, preferably in a form analogous to that of the corresponding list of reference (L1, L2, ..., L5, ..., Lk).

5. The method for correlation according to one of claims 1 to 4, whereby the processing in step f) comprises a step for the determination of the existence of homologous points of interest between the candidate list and each list of reference.

6. The method for correlation according to one of claims 1 to 5, whereby the processing step f) comprises a statistical analysis of the reference points of interest in each list of reference (L1, L2, ..., L5, ..., Lk) and candidate points of interest.

7. The method for correlation according to claim 6, whereby the points of interest are defined by composing M coordinates and the statistical analysis is carried out on groups, each formed by the coordinates or assembly of coordinates of points of interest of the same ranking for points of interest.

8. The method for correlation according to claim 7, whereby the groups, each formed by the coordinates or assembly of coordinates of the same ranking for candidate points of interest, are ranked according to a criterion of similarity in relation to the groups, each formed by the coordinates or assembly of coordinates of the same ranking for reference points of interest.

9. The method for correlation according to one of claims 5 to 8, whereby the processing step f) comprises a geometric analysis comprising the matching of candidate points of interest from the candidate list (Lc) with the homologous reference points of interest from each list of reference (L1, L2, ..., L5, ..., Lk).

10. The method for correlation according to claim 8, comprising a step of determining whether the candidate image (Ican) belongs to a predetermined rank.

11. The method for correlation according to claim 10, comprising a step of unitary recognition of the candidate image (Ican).

12. Use of the method for correlation according to one of claims 10 and 11 in order to recognize different elements on a route to establish a digital collection of digital content, said reference images being selected according to elements to be recognized on the route.

13. Use according to claim 12, according to which it is intended, prior to the recognition of elements, to save in a database the digital content associated with each element.

14. Use according to one of claims 12 and 13, according to which it is intended, subsequent to the recognition of elements, to save in a database or in a register, the access and/or property transfer of the element, and/or the creation of a cryptographic token, and/or access to a cryptographic token associated with the element.

15. Method for the elaboration of a reference list (L1, L2, ..., L5, ..., Lk) based on a reference image (Iref1, Iref2, Iref3, Iref4, Iref5,..., Irefk) comprising the following steps:
- implementing a relational database comprising at least: an organized list of relational descriptors (Desc1', Desc2', Desc3',..., DescN'), at least one calculation method to be applied to the reference image (Iref1, Iref2, Iref3, Iref4, Iref5,..., Irefk) in order to determine the descriptors of this image, and a method for determining the degree of similarity between two descriptors, and
- determining descriptors for the reference image, calculated according to each calculation method for the descriptor from the relational database, and the position of each of these descriptors in the reference image,
- determining the degree of similarity, determined according to the method of determination of the relational database, between each reference image descriptor and each relational descriptor from the relational database,
- determining, from a list of reference comprising the position, said reference points of interest, in the reference image (Iref1, Iref2, Iref3, Iref4, Iref5,..., Irefk), each reference image descriptor presenting the greatest similarity with the corresponding relational descriptor (Desc1', Desc2', Desc3',..., DescN') and that is organized according to the order in the relational database.
